# EUROPÄISCHE PATENTSCHRIFT

(11) **EP 3 344 684 B1**
(45) Veröffentlichungstag und Bekanntmachung des Hinweises auf die Patenterteilung: **27.02.2019**
(21) Anmeldenummer: 16762746.2
(22) Anmeldetag: 24.08.2016
(51) Int. Cl.: C08G 77/38, C08G 77/395

(54) **VERFAHREN ZUR HERSTELLUNG VON ORGANYLOXYGRUPPEN AUFWEISENDEN ORGANOSILICIUMVERBINDUNGEN**
PROCESS FOR PREPARING ORGANOSILICON COMPOUNDS CONTAINING ORGANYLOXY GROUPS
PROCÉDÉ DE PRODUCTION DE COMPOSÉS ORGANOSILICIÉS PRÉSENTANT DES GROUPES ORGANYLOXY

(30) Priorität: 31.08.2015 DE 102015216598
(43) Veröffentlichungstag der Anmeldung: 11.07.2018
(73) Patentinhaber: Wacker Chemie AG, 81737 München (DE)
(72) Erfinder: PRASSE, Marko, 01612 Glaubitz (DE); OSTENDORF, Detlev, 01129 Dresden (DE)
(74) Vertreter: Budczinski, Angelika
(86) Internationale Anmeldenummer: PCT/EP2016/070022
(87) Internationale Veröffentlichungsnummer: WO 2017/036892

(56) Entgegenhaltungen:
- EP-B1- 1 964 872

## Beschreibung

Die vorliegende Erfindung betrifft Organyloxygruppen aufweisende Organosiliciumverbindungen, ein Verfahren zu deren Herstellung und der Herstellung von bei Raumtemperatur unter Abspaltung von Alkoholen zu Elastomeren vernetzbaren Massen, sogenannten RTV-1-Massen.

Verfahren zur Herstellung von bei Raumtemperatur bei Zutritt von Wasser vernetzbaren Massen sind seit langem bekannt. Typischerweise enthalten solche Massen im Wesentlichen Organopolysiloxane mit mindestens zwei hydrolysierbaren Resten, wie Alkoxygruppen, Vernetzer mit mindestens drei hydrolysierbaren Resten, wie Alkoxygruppen, und Katalysatoren, wie etwa Organozinn- oder Organotitanverbindungen. Die als Basispolymere eingesetzten endblockierten Siloxane werden dabei durch sog. "Endcapping" hergestellt.
Endcapping ist für die Herstellung von unter Abspaltung von Alkoholen vernetzbaren RTV-1-Massen essentiell. Das Endcapping kann auf unterschiedliche Weise durchgeführt werden, wobei es aus Gründen der Wirtschaftlichkeit häufig erforderlich ist, die Endcappingreaktion mit Hilfe von Katalysatoren zu beschleunigen. Über den Einsatz geeigneter Katalysatorsysteme sei auf EP-B-1 107 788 und EP-B-1 964 872 sowie die dort genannten Nachteile der beschriebenen Verfahren zum Endcapping verwiesen: Meist sind die Reaktionszeiten sehr lang, so dass höhere Temperaturen als die bei der Mischungsherstellung üblicherweise entstehenden Temperaturen nötig sind; weiterhin müssen die eingesetzten Säuren oder Basen bzw. die benötigten hohen Katalysatorkonzentrationen in einem zusätzlichen Arbeitsschritt desaktiviert und/oder entfernt werden; viele Systeme neigen zur Vergilbung oder sind nur in bestimmten Formulierungen stabil.

In US-A-3,151,099 werden Organyltitanverbindungen als Katalysator für die Herstellung von Siloxanbindungen aus Silanol und Alkoxysil(ox)anen eingesetzt; eine weitere Möglichkeit der Katalyse der Endcappingreaktion mit Aluminiumchelatverbindungen ist in GB-A-2 144 758 aufgezeigt. Der Nachteil der Verwendung von Aluminium- oder Titankatalysatoren für die Endcappingreaktion besteht darin, dass sie während des Endcappings eine Vergelung einhergehend mit einem starken Viskositätsanstieg des Polymergemisches bewirken. Eine Methode zur Viskositätsverringerung wird in EP-B-1 107 788 beschrieben, wobei Methanol während der Endcappingreaktion mit Tetraalkyltitanat hinzugefügt wird, nachdem die Vergelung und der Viskositätsanstieg eingesetzt hat. Dieses Verfahren erfordert jedoch bei Normalbedingungen, d.h. Raumtemperatur und Umgebungsdruck, lange Endcappingzeiten; außerdem wird die unerwünschte Viskositätserhöhung nicht verhindert, sodass dieses Verfahren keine praktikable Lösung für den Einsatz im Produktionsmaßstab bietet.
EP-B-1 964 872 beschreibt die Kombination von Zinkchelat mit basischen Stickstoffverbindungen oder Alkohol als Endcapping-Katalysatorsystem für die Herstellung von Alkoxy-terminierten Polydimethylsiloxanen bei Raumtemperatur. Dieses Verfahren hat zum einen den Nachteil, dass ein zusätzlicher Rohstoff in Form einer gesundheitsschädlichen Schwermetallverbindung für die Katalyse der Endcappingreaktion notwendig ist, zum anderen ist die Zeitspanne für die Endcappingreaktion zu lang, was dieses Verfahren für einen Einsatz im Produktionsmaßstab unwirtschaftlich macht.
In US-A-2011/0 046 299 wird eine Lösung von Lithiumhydroxid in Methanol als Endcapping-Katalysator eingesetzt und silylsubstituierte Guanidine als Katalysatoren für die Vernetzungsreaktion beschrieben. Diese Systeme haben jedoch den Nachteil, dass die unvulkanisierten Pasten eine geringe Lagerstabilität insbesondere bei höherer Temperatur aufweisen.

In EP-B-0 813 570 ist das In-situ-endcapping mit Orthophosphorsäureestern und/oder Polyphosphorsäureestern in Verbindung mit Calciumcarbonat beschrieben. EP-B-1 448 695 beschreibt zur Stabilisierung und Verbesserung der Lagerstabilität von RTV-1-Massen die Verwendung von P=O Gruppe aufweisender Phosphorverbindung, die über deren P=O Gruppe koordinativ an Zinnverbindung als Katalysator gebunden ist. Zur Herstellung von Organyloxygruppen aufweisenden Organosiliciumverbindungen werden hierbei jedoch keine Basen verwendet.

Gegenstand der Erfindung ist ein Verfahren zur Herstellung von Organyloxygruppen aufweisenden Organosiliciumverbindungen enthaltenden Zusammensetzungen, dadurch gekennzeichnet, dass
in einem ersten Schritt
mindestens eine Silanolgruppe aufweisende Organosiliciumverbindung (E) mit mindestens zwei Organyloxygruppen enthaltender Verbindung (B) in Anwesenheit von Base (C1) ausgewählt aus Guanidinen, Amidinen und lithiumhaltigen Basen vermischt und reagieren gelassen wird und
in einem zweiten Schritt
die so erhaltene Reaktionsmischung mit einer P=O Gruppe aufweisenden Phosphorverbindung (C3) versetzt wird.

Bei der erfindungsgemäß eingesetzten Silanolgruppen aufweisenden Organosiliciumverbindung (E) handelt es sich bevorzugt um solche enthaltend Einheiten der Formel

Rₐ(OH)_{b}SiO_{(4-a-b)/2} (I),

wobei
R gleiche oder verschiedene SiC-gebundene, gegebenenfalls substituierte Kohlenwasserstoffreste bedeuten,
a 0, 1, 2 oder 3, bevorzugt 1 oder 2, ist und
b 0, 1 oder 2, bevorzugt 0 oder 1, ist,
mit der Maßgabe, dass die Summe aus a+b≤4 ist und pro Molekül mindestens eine Einheit der Formel (I) mit b verschieden 0 anwesend ist.

Bei den erfindungsgemäß eingesetzten Organosiliciumverbindungen (E) kann es sich sowohl um Silane handeln, d.h. Verbindungen der Formel (I) mit a+b=4, als auch um Siloxane, d.h. Verbindungen enthaltend Einheiten der Formel (I) mit a+b≤3. Vorzugsweise handelt es sich bei den erfindungsgemäß eingesetzten Organosiliciumverbindungen um Organopolysiloxane, insbesondere um solche, die aus Einheiten der Formel (I) bestehen.

Im Rahmen der vorliegenden Erfindung sollen von dem Begriff Organopolysiloxane sowohl polymere, oligomere wie auch dimere Siloxane mitumfasst werden.

Beispiele für R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest; sowie gamma-funktionalisierte Propylreste, wie der 3-Aminopropylrest, 3-(2-Aminoethyl)aminopropylrest, 3-Glycidoxypropylrest, 3-Mercaptopropylrest und 3-Methacryloxypropylrest.

Bevorzugt handelt es sich bei Rest R um Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind. Besonders bevorzugt handelt es sich bei Rest R um Kohlenwasserstoffreste mit 1 bis 8 Kohlenstoffatomen, insbesondere um den Methylrest.

Bevorzugt handelt es sich bei Organosiliciumverbindung (E) um mindestens zwei Silanolgruppen aufweisende Organosiliciumverbindungen.

Bevorzugt handelt es sich bei Organosiliciumverbindung (E) um im Wesentlichen lineare Organopolysiloxane.

Die erfindungsgemäß eingesetzten Polymere der Formel (I) haben eine dynamische Viskosität von bevorzugt 10² bis 10⁸ mPa·s, besonders bevorzugt von 1 000 bis 350 000 mPa·s, jeweils bei 25°C.

Beispiele für erfindungsgemäß eingesetzte Organosiliciumverbindung (E) sind

HO(Si(CH₃)₂O)₂₉₋₁₀₀₀Si(CH₃)₂(CH₂)₃NH₂,

HO(Si(CH₃)₂O)₂₉₋₁₀₀₀Si(CH₃)₂(OH),

HO(Si(CH₃)₂O)₂₉₋₁₀₀₀Si(CH₃)₃,

HO(Si(CH₃)₂O)₀₋₁₀₀Si(CH₃)₂(CH₂)₃O(CH₂CH(CH₃)O)₁₀₋₁₀₀₀(CH₂)₃(Si(CH₃)₂O)₀₋₁₀₀Si(CH₃)₂(OH),

HO(Si(CH₃)₂O)₃₋₅₀₀Si[O(Si(CH₃)₂O)₃₋₅₀₀H]₃

und

HO(Si(CH₃)₂O)₃₋₅₀₀Si(CH₃)[O(Si(CH₃)₂O)₃₋₅₀₀H]₂,

wobei HO(Si(CH₃)₂O)₃₀₋₁₀₀₀Si(CH₃)₂(OH) bevorzugt sind.

Komponente (E) sind handelsübliche Produkte bzw. nach in der Chemie gängigen Verfahren herstellbar.

Bei der erfindungsgemäß eingesetzten Organyloxygruppen aufweisenden Verbindung (B) handelt es sich bevorzugt um solche enthaltend Einheiten der Formel

R¹_{c}(OR²)_{d}(OH)ₑSiO(_{4-c-d-e)/2} (II),

wobei
R¹ gleiche oder verschiedene SiC-gebundene Kohlenwasserstoffreste bedeuten,
R² gleich oder verschieden sein kann und Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1, bevorzugt 0, ist,
mit der Maßgabe, dass die Summe aus c+d+e≤4 ist und pro Molekül mindestens zwei Reste -OR² vorhanden sind.

Bevorzugt handelt es sich bei Verbindung (B) um mindestens drei Organyloxygruppen aufweisende Organosiliciumverbindungen.

Bei den erfindungsgemäß eingesetzten Verbindungen (B) kann es sich sowohl um Silane handeln, d.h. Verbindungen der Formel (II) mit c+d+e=4, als auch um Siloxane, d.h. Verbindungen enthaltend Einheiten der Formel (II) mit c+d+e≤3. Vorzugsweise handelt es sich bei den erfindungsgemäß eingesetzten Verbindungen (B) um Silane der Formel (II), wobei d dann bevorzugt 3 oder 4 ist.

Beispiele für Reste R¹ sind die für Rest R angegebenen Beispiele für Kohlenwasserstoffreste.

Bevorzugt handelt es sich bei Rest R¹ um Methyl-, Ethyl-, n-Propyl-, iso-Propyl-, 1-n-Butyl-, 2-n-Butyl-, iso-Butyl-, tert.-Butyl-, Phenyl- und Vinylrest, wobei Methyl- und Vinylrest besonders bevorzugt sind.

Beispiele für Reste R² sind die für Rest R angegebenen Beispiele für Kohlenwasserstoffreste.

Bevorzugt handelt es sich bei Rest R² um den Methyl-, Ethyl- und iso-Propylrest, besonders bevorzugt um den Methyl- und den Ethylrest, insbesondere um den Methylrest.

Beispiele für erfindungsgemäß eingesetzte Verbindung (B) sind Methyltrimethoxysilan, Dimethyldimethoxysilan, Tetramethoxysilan, Vinyltrimethoxysilan, Methylvinyldimethoxysilan, Methyltriethoxysilan, Tetraethoxysilan, Phenyltrimethoxysilan, n-Butyltrimethoxysilan, iso-Butyltrimethoxysilan und tert-Butyltrimethoxysilan sowie deren Teilhydrolysate, wobei Methyltrimethoxysilan, Tetramethoxysilan, Vinyltrimethoxysilan, Methylvinyldimethoxysilan, Methyltriethoxysilan, Tetraethoxysilan oder n-Butyltrimethoxysilan bevorzugt sowie Methyltrimethoxysilan, Tetramethoxysilan, Vinyltrimethoxysilan, Tetraethoxysilan oder n-Butyltrimethoxysilan besonders bevorzugt sind.

Komponente (B) sind handelsübliche Produkte bzw. nach in der Chemie gängigen Verfahren herstellbar.

Bei dem erfindungsgemäßen Verfahren wird Komponente (B) in molaren Mengen von bevorzugt 2 bis 100, besonders bevorzugt 5 bis 50, jeweils bezogen auf 1 Mol an Si-gebundene OH-Gruppen in der Verbindung (E), eingesetzt.

Bei den erfindungsgemäß eingesetzten Basen (C1) handelt es sich bevorzugt um solche mit einem pH-Wert von mindestens 11,0, besonders bevorzugt von mindestnes 12,0. Der pH-Wert wird dabei gemessen in 0,05 M Lösung in einem Gemisch aus 10 Gewichtsteilen Ethanol und 3 Gewichtsteilen Wasser bei 20°C und dem Druck der umgebenden Atmosphäre, bevorzugt 1013 hPa, mit einem pH-Meter der Fa. Mettler Toledo aus CH-Schwerzenbach, Typ SevenCompact S220 und einer pH-Elektrode vom Typ InLab® Expert Pro ISM.

Bevorzugt handelt es sich bei den erfindungsgemäß gegebenenfalls eingesetzten Guanidinen (C1) um solche der Formel 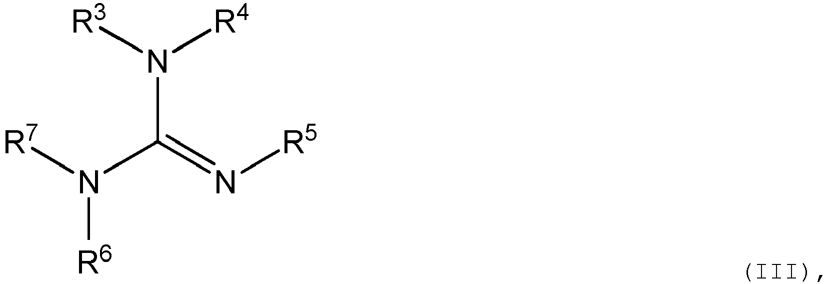 wobei R³, R⁴, R⁵, R⁶ und R⁷ jeweils unabhängig voneinander Wasserstoffatom oder gegebenenfalls substituierten Kohlenwasserstoffrest bedeuten.

Bevorzugt handelt es sich bei den erfindungsgemäß gegebenenfalls eingesetzten Amidinen (C1) um solche der Formel 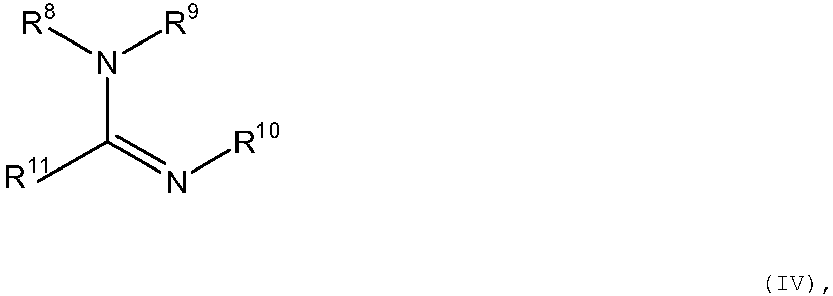 wobei R⁸, R⁹, R¹⁰ und R¹¹ jeweils unabhängig voneinander Wasserstoffatom oder gegebenenfalls substituierten Kohlenwasserstoffrest bedeuten.

Beispiele für Kohlenwasserstoffreste R³, R⁴, R⁵, R⁷, R⁸, R⁹, R¹⁰ und R¹¹ sind jeweils unabhängig voneinander Wasserstoffatom und die für Rest R angegebenen Beispiele. Falls es sich bei R³, R⁴, R⁵, R⁷, R⁸, R⁹, R¹⁰ und R¹¹ um substituierte Kohlenwasserstoffreste handelt, sind als Substituenten jeweils unabhängig voneinander Halogenatome, Aminogruppen, Ethergruppen, Estergruppen, Epoxygruppen, Mercaptogruppen, Cyanogruppen oder (Poly)glykolreste bevorzugt, wobei letztere aus Oxyethylen- und/oder Oxypropyleneinheiten aufgebaut sind.

Obwohl in den Formeln (III) und (IV) nicht ausgedrückt, können zwei oder mehr Reste R³, R⁴, R⁵, R⁶ und R⁷ bzw. R⁸, R⁹, R¹⁰ und R¹¹ zusammen auch einen di- oder mehrfunktionellen, gegebenenfalls substituierten Kohlenwasserstoffrest mit 2 bis 8 Kohlenstoffatomen darstellen.

Handelt es sich bei den di- oder mehrfunktionellen Kohlenwasserstoffresten um einen mit Heteroatom substituierten Kohlenwasserstoffrest, so ist das Heteroatom bevorzugt Sauerstoff, Stickstoff oder Schwefel, besonders bevorzugt Stickstoff oder Sauerstoff. Der Kohlenwasserstoffrest kann auch mehrere Heteroatome enthalten. Beispielsweise können R⁴ und R⁵, R³ und R⁷, R⁹ und R¹⁰ zusammen einen Ring bilden, wie im Azolidin, Azinan, 1,3-Diazinan, Azepan, 1,4,5,6-tetrahydropyrimidin, 4,5-dihydro-1H-imidazol, Imidazol, Imidazolidin, Azocan, 1,3-Diazepan oder 4,5,6,7-tetrahydro-1H-1,3-diazepin.

Bevorzugt handelt es sich bei den Resten R³, R⁴, R⁵ und R⁷ um Wasserstoffatom, Phenylgruppen, Butylgruppen oder Methylgruppen oder Propylengruppen, sofern zwei der genannten Reste zusammen einen Ring bilden, besonders bevorzugt um Wasserstoffatom oder Methylgruppen oder Propylengruppen, sofern zwei der genannten Reste zusammen einen Ring bilden.

Bei Kohlenwasserstoffrest R⁶ handelt es sich vorzugsweise um Wasserstoffatom oder Kohlenwasserstoffreste mit 1 bis 18 Kohlenstoffatomen, die gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind.

Bevorzugt handelt es sich bei den Resten R⁹ und R¹⁰ um Wasserstoffatom, Methylgruppen oder um einen gegebenenfalls substituierten difunktionellen Kohlenwasserstoffrest, wobei die Reste R⁹ und R¹⁰ zusammen einen Ring bilden können, besonders bevorzugt um einen difunktionellen Kohlenwasserstoffrest, wie dem Propylenrest, wobei Rest R⁹ und R¹⁰ einen Ring bilden.

Bevorzugt handelt es sich bei den Resten R⁸ und R¹¹ um Wasserstoffatom, Methylgruppen oder um einen gegebenenfalls substituierten difunktionellen Kohlenwasserstoffrest, wobei dabei die einzelnen Reste gemeinsam einen Ring bilden können, besonders bevorzugt um Wasserstoffatom oder um einen difunktionellen Kohlenwasserstoffrest, wobei die einzelnen Reste gemeinsam einen Ring bilden können.

Bevorzugt handelt es sich bei den Guanidinen (C1) um 1,5,7-Triazabicyclo[4.4.0]dec-5-en, 7-Methyl-1,5,7-Triazabicyclo-[4.4.0]dec-5-en, 1-n-Butylguanidin, 1,3-Diphenylguanidin und N,N,N',N'-Tetramethylguanidin, besonders bevorzugt um 1,5,7-Triazabicyclo[4.4.0]dec-5-en und 7-Methyl-1,5,7-Triazabicyclo[4.4.0]dec-5-en, insbesondere um 1,5,7-Triazabicyclo[4.4.0]-dec-5-en.

Bevorzugt handelt es sich bei den Amidinen (C1) um 1,2-Dimethyl-1,4,5,6-tetrahydropyrimidin, 1,4,5,6-Tetrahydropyrimidin, 1,8-Diazabicyclo[5.4.0]undec-7-en (DBU) und 1,5-Diazabicyclo[4.3.0]non-5-en (DBN), besonders bevorzugt um 1,8-Diazabicyclo[5.4.0]undec-7-en und 1,5-Diazabicyclo[4.3.0]non-5-en.

Bei den erfindungsgemäß gegebenenfalls eingesetzten lithiumhaltigen Basen (C1) kann sich um Lithiumhydroxid, Lithiumhydrid, Lithiumnitrid, Lithiumamid, Lithiumimid, Organolithiumverbindungen, wie Butyllithium oder Lithiumalkoholate, sowie lithiumhaltige Organosiliciumverbindungen, wie z.B. Lithiumsilanolat, beispielsweise erhältlich durch Umsetzung von Lithiumhydroxid mit Siloxanen oder Silanen, handeln bzw. um deren Gemische.

Bevorzugt handelt es sich bei den erfindungsgemäß gegebenenfalls eingesetzten lithiumhaltigen Basen (C1) um Lithiumhydroxid, Lithiummethanolat, Lithiumhydrid, Lithiumnitrid, Lithiumisopropylamid, n-Butyllithium, Lithiumethanolat oder deren Gemische.

Erfindungsgemäß eingesetzte Basen (C1) sind handelsübliche Produkte bzw. nach in der Chemie gängigen Verfahren herstellbar.

Bevorzugt handelt es sich bei (C1) um Guanidine, besonders bevorzugt um Guanidine der Formel (III), insbesondere um 1,5,7-Triazabicyclo[4.4.0]dec-5-en.

Zur besseren Handhabung können die erfindungsgemäß eingesetzten Basen (C1), insbesondere wenn sie im festen Aggregatzustand vorliegen, mit Verdünnungsmittel vermischt werden.

Als Verdünnungsmittel eignen sich alle Stoffe, die auch bisher zur Verdünnung von Basen eingesetzt werden konnten, wie z.B. Stoffe mit einem Schmelzpunkt von unter 20°C bei 1000 hPa, wobei als Verdünnungsmittel bevorzugt Komponente (B) und/oder organisches Lösungsmittel (D) eingesetzt wird.

Als Lösungsmittel (D) können beliebige Stoffe mit einem Schmelzpunkt von unter 20°C bei 1000 hPa eingesetzt werden, bevorzugt solche, welche nicht die Wirkung der Base (C1) beeinträchtigen.

Beispiele für organische Lösungsmittel (D) sind Alkohole, wie Methanol, Ethanol, n-Propanol, iso-Propanol, n-Amylalkohol, i-Amylalkohol, 1,3-Propandiol, 2-Methyl-1,3-propandiol, Dipropylenglykol, Dipropylenglykol-monomethylether, 3-Methoxy-3-Methyl-1-butanol, Texanol; Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon (MIBK); Ester, wie Ethylacetat, Butylacetat, Propylpropionat, Ethylbutyrat, Ethyl-isobutyrat; Acetale, wie Dioxolan, Butylal, 2,5,7,10- Tetraoxaundecan; und Pyrrolidone, wie 1-Cyclohexyl-2-pyrrolidon, Nitrile, wie Acetonitril, oder Gemische dieser Lösungsmittel.

Falls erfindungsgemäß organische Lösungsmittel (D) eingesetzt werden, handelt es sich bevorzugt um einwertige und zweiwertige Alkohole, besonders bevorzugt um Methanol oder Ethanol, insbesondere um Methanol.

Bei dem erfindungsgemäßen Verfahren wird Base (C1) bevorzugt im Gemisch mit Verdünnungsmittel eingesetzt, wobei dann bevorzugt 1 bis 2000 Gewichtsteile, besonders bevorzugt 50 bis 1000 Gewichtsteile, Verdünnungsmittel, jeweils bezogen auf ein Gewichtsteil Base (C1) verwendet wird.

Bei dem erfindungsgemäßen Verfahren wird Base (C1) in Mengen von bevorzugt 1 bis 2000 Gew.-ppm, besonders bevorzugt von 10 bis 1000 Gew.-ppm, insbesondere von 50 bis 500 Gew.-ppm, jeweils bezogen auf das Gesamtgewicht an Komponente (E), eingesetzt.

Bei der erfindungsgemäß eingesetzten P=O Gruppe aufweisenden Phosphorverbindung (C3) handelt es sich bevorzugt um solche, ausgewählt aus Phosphorverbindungen der allgemeinen Formel

O=PR¹⁶ₘ(OR¹⁷)ₙ(OH)₃₋₍ₘ₊ₙ₎ (VII),

wobei
m gleich 0 oder 1 ist,
n gleich 0, 1, 2 oder 3 ist,
m+n gleich 1, 2 oder 3 beträgt,
R¹⁶ gegebenenfalls substituierter Kohlenwasserstoffrest darstellt,
R¹⁷ gleich oder verschieden sein kann und gegebenenfalls substituierter Kohlenwasserstoffrest, der mit Heteroatomen unterbrochen sein kann, über Si gebundener Triorganosilylrest, über Si gebundener Organoalkoxysilylrest oder über P gebundener Phosphatrest, bedeutet,
mit der Maßgabe, dass im Fall von R¹⁷ gleich gegebenenfalls substituierter Kohlenwasserstoffrest m gleich 0 und n gleich 1 oder 2, bevorzugt 1, ist.

Beispiele für gegebenenfalls substituierte Kohlenwasserstoffreste Reste R¹⁶ und R¹⁷ sind die für Rest R angegebenen Beispiele.

Bevorzugt handelt es sich bei Rest R¹⁶ um Kohlenwasserstoffreste mit 1 bis 30 Kohlenstoffatomen, besonders bevorzugt um Kohlenwasserstoffreste mit 1 bis 14 Kohlenstoffatomen.

Bevorzugt handelt es sich bei Rest R¹⁷ um Kohlenwasserstoffreste mit 1 bis 30 Kohlenstoffatomen, Triorganosilylreste oder Organodialkoxysilylreste, besonders bevorzugt um Kohlenwasserstoffreste mit 1 bis 14 Kohlenstoffatomen, Alkyldialkoxysilylreste oder Alkenyldialkoxysilylrest.

Beispiele für P=O Gruppe aufweisende Phosphorverbindungen (C3) sind Tris-(trimethylsilyl)-phosphat, Methylphosphonsäure, n-Butylphosphonsäure, n-Octylphosphonsäure, Mono-(methyldimethoxysilyl)-n-octylphosphonat, Vinylphosphonsäure, Phenylphosphonsäure, Mono-(2-ethylhexyl)-phosphat, Gemisch aus Mono- und Di-(2-ethylhexyl)-phosphat, Mono-(isodecyl)-phosphat, Gemisch aus Mono- und Di-(isononyl)-phosphat, Trimethylsilyl-di-(2-ethylhexyl)-phosphat und Bis(trimethylsilyl)-mono-(2-ethylhexyl)phosphat.

Besonders bevorzugt handelt es sich bei der erfindungsgemäß eingesetzten P=O Gruppe aufweisenden Phosphorverbindung (C3) um Phosphonsäuren, Monoester der Phosphorsäure, Silylester der Phosphonsäure oder Silylester der Phosphorsäure.

Die erfindungsgemäße P=O Gruppe aufweisende Phosphorverbindungen (C3) sind handelsübliche Verbindungen bzw. nach in der Chemie gängigen Verfahren herstellbar.

Zur besseren Handhabung können die erfindungsgemäß eingesetzten P=O Gruppe aufweisenden Phosphorverbindungen (C3), insbesondere wenn sie im festen Aggregatzustand vorliegen, mit Verdünnungsmittel vermischt werden.

Als Verdünnungsmittel eignen sich alle Stoffe, die auch bisher zur Verdünnung von P=O Gruppe aufweisenden Verbindungen eingesetzt werden konnten, wie z.B. Stoffe mit einem Schmelzpunkt von unter 20°C bei 1000 hPa, wobei als Verdünnungsmittel bevorzugt Komponente (B) oder organisches Lösungsmittel (D) eingesetzt wird. Die Wahl des Verdünnungsmittels für Komponente (C3) erfolgt bevorzugt unabhängig von der Wahl des Verdünnungsmittels für Komponente (C1).

Bei dem erfindungsgemäßen Verfahren wird Verbindung (C3) bevorzugt im Gemisch mit Verdünnungsmittel eingesetzt, wobei Verdünnungsmittel in Mengen von bevorzugt 0,1 bis 10 Gewichtsteilen, besonders bevorzugt 0,5 bis 5 Gewichtsteilen, jeweils bezogen auf ein Gewichtsteil Verbindung (C3) verwendet wird.

Im erfindungsgemäßen Verfahren wird Komponente (C3) in Mengen von vorzugsweise 0,01 bis 5,0 Gewichtsteilen, besonders bevorzugt von 0,05 bis 3,0 Gewichtsteilen, insbesondere von 0,1 bis 2,0 Gewichtsteilen, jeweils bezogen auf 100 Gewichtsteile der im ersten Schritt eingesetzten Menge an Komponente (E), eingesetzt.

Bevorzugt handelt es sich bei dem erfindungsgemäßen Verfahren um ein Verfahren zur Herstellung von durch Kondensationsreaktion vernetzbaren Massen, wobei zusätzliche Komponenten eingesetzt werden können.

Zusätzlich zu den beschriebenen Komponenten (B), (C1), (C3), (D) und (E) können bei dem erfindungsgemäßen Verfahren nun alle Stoffe eingesetzt werden, die auch bisher in durch Kondensationsreaktion vernetzbaren Massen eingesetzt worden sind, wie z.B. metallhaltige Kondensationskatalysatoren (F), Calciumcarbonat (G), weitere Füllstoffe (G1), Weichmacher (H) und weitere Bestandteile (I).

Bei dem erfindungsgemäß eingesetzten Katalysator (F) kann es sich um handelsübliche Produkte handeln bzw. um solche, die in der Chemie nach gängigen Verfahren herstellbar sind. Beispiele für die erfindungsgemäß gegebenenfalls eingesetzten Katalysatoren (F) sind Titanverbindungen, wie Tetra-n-propoxy-orthotitanat, Tetra-iso-propoxy-orthotitanat, Tetra-n-butyl-orthotitanat, Tetra-iso-butyl-orthotitanat, Tetra-tert-butyl-orthotitanat und Bis(ethylacetoacetato)diisobutoxy-titanat; sowie organische Zinnverbindungen, wie Dimethylzinndiacetat, Dimethylzinnoxid, Dimethylzinndilaurat, Di-n-butylzinndilaurat, Di-n-butylzinndiacetat, Di-n-butylzinnoxid, Di-n-butylzinndineodecanoat, Di-n-butylzinndiacetylacetonat, Di-n-butylzinnmaleat, Din-octylzinndiacetat, Di-n-octylzinndilaurat, Di-n-octylzinnoxid, Di-n-octylzinnmaleat, Di-n-octylzinndi(2-ethyl)hexanoat, Di-n-octylzinnneodecanoat, Di-n-octylzinnisodecanoat deren Teilhydrolysate und Umsetzungsprodukte dieser Verbindungen oder Teilhydrolysate mit Alkoxysilanen, wie Tetraethoxysilan, Methyltriethoxysilan, Methyltrimethoxysilan, Propyltrimethoxysilan, 3-Aminopropyl-trimethoxysilan, 3-Aminopropyl-triethoxysilan, 2-Aminoethyl-3-aminopropyl-trimethoxysilan, 2-Aminoethyl-3-aminopropyl-trimethoxysilan oder deren Kondensations- oder Cokondensationsprodukte, Estern, wie Phthalsäurediisodecylester, Phthalsäuredi-n-octylester, oder Phthalsäurediisodecylester.

Bevorzugt handelt es sich bei Komponente (F) um Titanchelate, Tetra-tert-butyl-orthotitanat und Umsetzungsprodukte von Dimethylzinndiacetat, Dimethylzinnoxid, Di-n-butylzinndiacetat, Din-butylzinnoxid, Di-n-octylzinndiacetat oder Di-n-octylzinnoxid mit Alkoxysilanen, wie Tetraethoxysilan, Methyltriethoxysilan, Methyltrimethoxysilan, Propyltrimethoxysilan, 3-Aminopropyl-trimethoxysilan, 3-Aminopropyl-triethoxysilan, 2-Aminoethyl-3-aminopropyl-trimethoxysilan, 2-Aminoethyl-3-aminopropyl-trimethoxysilan oder deren Kondensations- oder Cokondensationsprodukte, besonders bevorzugt um Titanchelate und Umsetzungsprodukte von Dimethylzinnoxid, Di-n-butylzinnoxid, oder Di-n-octylzinnoxid mit Alkoxysilanen, wie Tetraethoxysilan, Methyltriethoxysilan, Methyltrimethoxysilan, 3-Aminopropyl-trimethoxysilan, 3-Aminopropyl-triethoxysilan, 2-Aminoethyl-3-aminopropyl-trimethoxysilan, 2-Aminoethyl-3-aminopropyl-trimethoxysilan oder deren Kondensations- oder Cokondensationsprodukte.

Falls im erfindungsgemäßen Verfahren Katalysatoren (F) eingesetzt werden, handelt es sich um Mengen von vorzugsweise 0,01 bis 10,0 Gewichtsteilen, besonders bevorzugt von 0,01 bis 5,0 Gewichtsteilen, insbesondere von 0,1 bis 3,0 Gewichtsteilen, jeweils bezogen auf 100 Gewichtsteile der vernetzbaren Gesamtmischung. Katalysator (F) wird bevorzugt eingesetzt.

Bei den erfindungsgemäß gegebenenfalls eingesetzten Füllstoffen (G) handelt es sich um Calciumcarbonat, bevorzugt um gemahlenes oder gefälltes Calciumcarbonat, besonders bevorzugt um gemahlenes Calciumcarbonat aus natürlichen Quellen, wie Kalkstein und Marmor oder um gefälltes Calciumcarbonat, welches anschließend auf einen Feuchtigkeitsgehalt von kleiner 0,5 Gew.-% getrocknet wurde. Das Calciumcarbonat kann nach bekannten Verfahren mit Stearinsäure in Mengen von bevorzugt 0,1 bis 4,0 Gew.-%, bezogen auf die Menge des zu behandelnden Calciumcarbonats, behandelt sein. Die Stearinsäure stammt bevorzugt aus natürlichen Quellen und enthält meist neben der Stearinsäure weitere langkettige Carbonsäuren mit 14 bis 22 Kohlenstoffatomen.

Die erfindungsgemäße gegebenenfalls eingesetzte Komponente (G) hat eine mittlere Teilchengröße (D50) von bevorzugt 0,1 bis 10 µm, besonders bevorzugt 1 bis 5 µm.

Bevorzugt hat die erfindungsgemäße gegebenenfalls eingesetzte Komponente (G) einen Anteil an Stearinsäure von 0,5 bis 1,0 Gew.-%, besonders bevorzugt von 0,7 bis 0,9 Gew.-%, insbesondere in etwa 0,8 Gew.-%.

Die erfindungsgemäße gegebenenfalls eingesetzte Komponente (G) hat einen Feuchtigkeitsgehalt, gemessen am Gewichtsverlust bei Trocknung bei 110°C und einem Druck von 1013 hPa, von bevorzugt kleiner 0,05 Gew.-%.

Beispiele für Komponente (G) sind die bei der Firma OMYA, D-Köln, erhältlichen Produkte mit dem Handelsnamen OMYACARB BLR3, OMYACARB 2T-AV, OMYACARB 5-GU, OMYA BLH, OMYABOND 520-FL, OMYABOND 520-OM und OMYACARB 5T-NJ, die bei der Firma Imerys Minerals GmbH erhältlichen Produkte Imerseal 50, Carbital 110 und Carbital 110S oder die bei der Firma Calcit d.o.o., Slowenien, erhältlichen Produkte PolyPlex 2 oder PolyPlex 5.

Falls im erfindungsgemäßen Verfahren Komponente (G) eingesetzt wird, handelt es sich um Mengen von vorzugsweise 10 bis 60 Gewichtsteilen, besonders bevorzugt von 30 bis 55 Gewichtsteilen, insbesondere von 40 bis 55 Gewichtsteilen, jeweils bezogen auf 100 Gewichtsteile der vernetzbaren Gesamtmischung.

Bei den erfindungsgemäßen gegebenenfalls eingesetzten weiteren Füllstoffen (G1) kann es sich um beliebige, bisher bekannte Füllstoffe handeln, die von Komponente (G) verschieden sind.

Beispiele für weitere Füllstoffe (G1) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (G1) eingesetzt werden, handelt es sich bevorzugt um hydrophile pyrogene Kieselsäure.

Falls erfindungsgemäße Komponente (G1) eingesetzt wird, handelt es sich um Mengen von vorzugsweise 1 bis 80 Gewichtsteilen, besonders bevorzugt von 1 bis 10 Gewichtsteilen, jeweils bezogen auf 100 Gewichtsteile der vernetzbaren Gesamtmischung. Bevorzugt enthalten die erfindungsgemäßen Massen Komponente (G1).

Beispiele für Weichmacher (H) sind bei Raumtemperatur und dem Druck von 1013 hPa flüssige, durch Trimethylsiloxygruppen endblockierte Dimethylpolysiloxane, insbesondere mit dynamischen Viskositäten bei 25°C im Bereich zwischen 5 und 1000 mPa·s, sowie hochsiedende Kohlenwasserstoffe, wie zum Beispiel Paraffinöle oder Mineralöle bestehend aus naphthenischen und paraffinischen Einheiten.

Falls erfindungsgemäße Komponente (H) eingesetzt wird, handelt es sich um Mengen von vorzugsweise 1 bis 50 Gewichtsteilen, besonders bevorzugt 5 bis 25 Gewichtsteilen, insbesondere 10 bis 20 Gewichtsteilen, jeweils bezogen auf 100 Gewichtsteile der vernetzbaren Gesamtmischung. Bevorzugt wird Komponente (H) eingesetzt.

Beispiele für weitere Bestandteile (I) sind solche, die verschieden sind zu Komponente (B), ausgewählt aus der Gruppe der Vernetzer, wie N-(Trimethoxysilylmethyl)-O-methyl-carbamat, N-(Dimethoxymethylsilylmethyl)-O-methyl-carbamat, Methyltriacetoxysilan, Ethyltriacetoxysilan, Propyltriacetoxysilan, Di-t-butoxydiacetoxysilan, Methyltris(methylethylketoximo)silan und Vinyltris(methylethylketoximo)silan, Tetra-kis-(methylethylketoximo)silan, Bis(N-Methylbenzamido)ethoxy-methylsilan, Methyltris-(propenyloxy)silan, Vinyltris-(propenyloxy)silan sowie deren Teilhydrolysate, die ggf. auch durch Cohydrolyse, dargestellt werden können, Haftvermittler, wie z.B. 3-Glycidoxypropyltrimethoxysilan, 3-Glycidoxypropyltriethoxysilan, 3-Glycidoxypropyldimethoxymethylsilan und 3-Glycidoxypropyldiethoxymethylsilan und 2-(3,4-Epoxycyclohexyl)ethyltriethoxysilan, Silane und Organopolysiloxane mit funktionellen Gruppen, wie solche mit 3-Aminopropyl-, 3-(2-Aminoethyl)aminopropyl-, Isocyanuratopropyl-, 3-Ureidopropyl- oder 3-Methacryloxypropylresten, 4-(Triethoxysilylmethyl)tetrahydro-1,4-oxazin, 4-(Trimethoxysilylmethyl)tetrahydro-1,4-oxazin, 4-(Diethoxymethylsilylmethyl)-tetrahydro-1,4-oxazin und 4-(Dimethoxymethylsilylmethyl)tetrahydro-1,4-oxazin, Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, Co-katalysatoren, wie Zinkchelate, bevorzugt wasserfreie Zinkchelate, wie z.B. wasserfreies Zink(II)-acetylacetonat, Thixotropiermittel, wie beispielsweise Polyether, organische Lösungsmittel, wie Alkylaromaten und Biozide wie Fungizide, Bacterizide oder Akarizide.

Falls erfindungsgemäße Komponente (I) eingesetzt wird, handelt es sich bevorzugt um Haftvermittler, Silane und Organopolysiloxane mit funktionellen Gruppen, Pigmente, Farbstoffe, Thixotropiermittel und Fungizide.

Falls es sich bei der eingesetzten Komponente (C1) um Amidine oder um nichtcyclische Guanidine handelt, kann es von Vorteil sein im ersten Schritt des erfindungsgemäßen Verfahrens Co-katalysator (I), besonders bevorzugt Zink-(II)-chelat, insbesondere Zink-(II)-acetylacetonat, einzusetzen.

Falls erfindungsgemäße Komponente (I), ausgenommen Co-katalysator, eingesetzt wird, handelt es sich um Mengen von vorzugsweise 0,0001 bis 10 Gewichtsteilen, besonders bevorzugt von 0,001 bis 10 Gewichtsteilen, jeweils bezogen auf 100 Gewichtsteile der vernetzbaren Gesamtmischung. Bevorzugt wird Komponente (I) eingesetzt.

Falls erfindungsgemäß als Komponente (I) in einer Ausführungsform der vorliegenden Erfindung Co-katalysator eingesetzt wird, handelt es sich um Mengen von vorzugsweise 1 bis 1000 Gewichts-ppm, besonders bevorzugt von 10 bis 500 Gewichts-ppm, jeweils bezogen auf 100 Gewichtsteile der im ersten Schritt eingesetzten Menge an Komponente (E).

Im erfindungsgemäßen Verfahren werden bevorzugt keine über die Komponenten (A) bis (I) hinausgehenden weiteren Bestandteile eingesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Im ersten Schritt des erfindungsgemäßen Verfahrens können die einzelnen Komponenten in beliebiger Reihenfolge und auf bisher bekannte Art und Weise miteinander vermischt werden. Es können aus einigen Komponenten auch Vormischungen hergestellt werden, wie z.B. eine Mischung aus den Komponenten (C1) mit (B) und/oder (D), die dann mit den anderen Komponenten vermischt werden. Einzelne Bestandteile können auch gleich zu Beginn oder während des Mischprozesses anwesend sein bzw. zugeführt werden. So kann z.B. ein Teil der Komponente (B) auch erst 1 bis 60 Minuten nach dem Vermischen der jeweils anderen Bestandteile zugegeben werden.

Im ersten Schritt des erfindungsgemäßen Verfahrens können zusätzlich zu den Komponenten (B), (E), (C1) und gegebenenfalls (D) weitere Stoffe eingesetzt werden, mit Ausnahme von Komponente (C3), metallhaltige Kondensationskatalysatoren (F) und Calciumcarbonat (G).

Der erste Schritt des erfindungsgemäßen Verfahrens wird bevorzugt ohne zusätzliches Heizen bei Umgebungstemperaturen bzw. den Temperaturen, die sich beim Mischen der einzelnen Komponenten ergeben, durchgeführt. Es handelt sich dabei bevorzugt um Temperaturen von 10 bis 70°C, besonders bevorzugt 15 bis 65°C. Falls erwünscht, kann dieses Verfahren aber auch bei höheren Temperaturen erfolgen, z.B. bei Temperaturen im Bereich von 35 bis 135°C. Falls gewünscht, kann geheizt oder gekühlt werden.

Der erste Schritt des erfindungsgemäßen Verfahrens wird bevorzugt beim Druck der umgebenden Atmosphäre, also 900 bis 1100 hPa, durchgeführt; es kann aber auch bei Überdruck gearbeitet werden, wie bei Drücken zwischen 1100 und 3000 hPa Absolutdruck, insbesondere bei kontinuierlicher Arbeitsweise, wenn z.B. diese Drücke sich bei geschlossenen Systemen durch den Druck beim Pumpen und durch den Dampfdruck der eingesetzten Materialien bei erhöhten Temperaturen ergeben. Falls erwünscht, kann Komponente (E) oder eine Mischung aus Komponente (E), Weichmacher (H) und/oder weitere Stoffe (I) zunächst bei Unterdruck, wie 50 bis 900 mbar Absolutdruck entgast und dann erst die Komponente (C1), (B) und gegebenenfalls (D) zugegeben werden.

Beim zweiten Schritt des erfindungsgemäßen Verfahrens wird die im ersten Schritt erhaltene Reaktionsmischung mit Komponente (C3) gegebenenfalls als Vormischung mit Verdünnungsmittel, bevorzugt (B) und/oder (D), sowie gegebenenfalls weiteren Komponenten vermischt.

Der zweite Schritt des erfindungsgemäßen Verfahrens wird bevorzugt ohne zusätzliches Heizen bei Umgebungstemperaturen bzw. den Temperaturen, die sich beim Mischen der einzelnen Komponenten ergeben, durchgeführt. Es handelt sich dabei bevorzugt um Temperaturen von 10 bis 100°C, besonders bevorzugt 15 bis 70°C. Falls erwünscht, kann gekühlt werden.

Der zweite Schritt des erfindungsgemäßen Verfahrens wird bevorzugt beim Druck der umgebenden Atmosphäre, also 900 bis 1100 hPa, durchgeführt; es kann aber auch bei Überdruck gearbeitet werden, wie bei Drücken zwischen 1100 und 3000 hPa Absolutdruck, insbesondere bei kontinuierlicher Arbeitsweise, wenn z.B. diese Drücke sich bei geschlossenen Systemen durch den Druck beim Pumpen und durch den Dampfdruck der eingesetzten Materialien bei erhöhten Temperaturen ergeben. Falls erwünscht, kann am Ende des zweiten Schritts die Mischung bei Unterdruck, wie 50 bis 500 mbar Absolutdruck, entgast werden.

Bevorzugt wird der zweite Schritt dann durchgeführt, wenn im ersten Schritt mindestens 50 %, besonders bevorzugt mindestens 70 %, insbesondere mindestens 90 %, der Si-gebundenen OH-Gruppen in Komponente (E) mit Komponente (B) reagiert haben.

Bevorzugt erfolgt der zweite Schritt im selben Mischer wie der erste Schritt, falls erwünscht, insbesondere bei kontinuierlicher Arbeitsweise, aber auch an einer anderen Stelle.

Falls gewünscht, kann die Mischung nach dem zweiten Schritt angewendet, zwischengelagert, transportiert oder in einem dritten Schritt weiterverarbeitet werden, wie z.B. Zugabe weiterer Komponenten. Die Lagerung kann über unterschiedlich lange Zeiträume, von wenigen Minuten bis mehrere Jahre, erfolgen.

Das erfindungsgemäße Vermischen der einzelnen Komponenten sowohl im ersten Schritt wie auch im zweiten Schritt findet bevorzugt unter weitestgehendem Ausschluss von Wasser aus der umgebenden Atmosphäre statt, was z.B durch Überschleierung mit trockener Luft, bevorzugt mit einem Taupunkt bei 1013 hPa unter 0°C, oder Stickstoff realisiert werden kann.

Das erfindungsgemäße Vermischen der einzelnen Komponenten sowohl im ersten Schritt wie auch im zweiten Schritt kann - falls erwünscht - unter Schutzgas, wie Stickstoff, durchgeführt werden.

Falls erwünscht, kann bei dem erfindungsgemäßen Verfahren zu beliebigen Zeitpunkten die Reaktionsmischung entflüchtigt werden, wobei die Entflüchtigung mittels vermindertem Druck im selben Apparat oder in einem nachgeschalteten Apparat, mit oder ohne Inertgaseinspeisung, bei Raumtemperaturen oder erhöhten Temperaturen durchgeführt wird. Bei den leichtflüchtigen Bestandteilen handelt es sich bevorzugt um Alkohole, wie Methanol oder Ethanol.

Das erfindungsgemäße Verfahren kann kontinuierlich, semikontinuierlich oder diskontinuierlich durchgeführt werden.

In einer bevorzugten Ausführungsform des erfindungsgemäßen Verfahrens werden
in einem ersten Schritt
mindestens eine Silanolgruppe aufweisende Organosiliciumverbindung (E), gegebenenfalls im Gemisch mit Weichmacher (H) und/oder weiteren Stoffen (I), gegebenenfalls bei einem Absolutdruck von 50 bis 300 mbar entgast und mit trockener Luft oder Stickstoff belüftet, mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, in einem Rührkessel vermischt und reagieren gelassen und
in einem zweiten Schritt
die so erhaltene Reaktionsmischung mit einer P=O Gruppe aufweisenden Phosphorverbindung (C3), gegebenenfalls im Gemisch mit Verdünnungsmittel, sowie mindestens einer Komponente ausgewählt aus Katalysator (F), Calciumcarbonat (G), Füllstoff (G1), Weichmacher (H) und weiteren Stoffen (I), miteinander vermischt, mit der Maßgabe, dass der zweite Schritt erst dann erfolgt, wenn im ersten Schritt mindestens 50 % der Si-OH-Gruppen in Komponente (E) mit Komponente (B) reagiert haben, sowie
in einem gegebenenfalls durchgeführten dritten Schritt die im zweiten Schritt erhaltene Mischung bei einem Absolutdruck von 50 bis 300 mbar entgast und mit trockener Luft oder Stickstoff belüftet wird. Die Temperatur hängt von der Ausgangstemperatur der Rohstoffe und den Prozessbedingungen ab und liegt bevorzugt im Bereich von 20 bis 60°C.

In einer weiteren bevorzugten Ausführungsform des erfindungsgemäßen Verfahrens werden
in einem ersten Schritt
Organosiliciumverbindung (E), gegebenenfalls im Gemisch mit Weichmacher (H), gegebenenfalls bei einem Absolutdruck von 50 bis 300 mbar entgast und mit trockener Luft oder Stickstoff belüftet, mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, in einem Rührkessel vermischt, und
in einem zweiten Schritt
die so erhaltene Reaktionsmischung mit einer P=O Gruppe aufweisenden Phosphorverbindung (C3), gegebenenfalls im Gemisch mit Verdünnungsmittel, vermischt, mit der Maßgabe, dass der zweite Schritt erst dann erfolgt, wenn im ersten Schritt mindestens 50 % der Si-OH-Gruppen in Komponente (E) mit Komponente (B) reagiert haben. Bevorzugt wird das Vermischen bei Normaldruck durchgeführt, am Schluss die Mischung bei einem Absolutdruck von 10 bis 300 mbar entgast und mit trockener Luft oder Stickstoff belüftet. Die Temperatur hängt wesentlich von der Ausgangstemperatur des Polymers (E) ab und liegt vorzugsweise im Bereich von 20 bis 60°C. Bevorzugt erfolgt dann die Abfüllung in einen Lagertank.

In einer weiteren bevorzugten Ausführungsform des erfindungsgemäßen Verfahrens werden
in einem ersten Schritt
Organosiliciumverbindung (E), gegebenenfalls im Gemisch mit Weichmacher (H), mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, kontinuierlich vermischt, in eine Verweilstrecke gepumpt und
in einem zweiten Schritt
die so erhaltene Reaktionsmischung mit einer P=O Gruppe aufweisenden Phosphorverbindung (C3), gegebenenfalls im Gemisch mit Verdünnungsmittel, sowie mindestens einer Komponente ausgewählt aus Katalysator (F), Calciumcarbonat (G), Füllstoff (G1), Weichmacher (H) und weiteren Stoffen (I), vermischt, mit der Maßgabe, dass der zweite Schritt erst dann erfolgt, wenn im ersten Schritt mindestens 50 % der Si-OH-Gruppen in Komponente (E) mit Komponente (B) reagiert haben. In der Mischzone und Verweilstrecke herrscht bevorzugt ein Druck von 1,0 bis 5,0 bar. Bevorzugt wird die Mischung nach Beendigung des zweiten Schritts bei einem Absolutdruck von 50 bis 500 mbar entflüchtigt. Die Temperatur hängt von der Ausgangstemperatur der Rohstoffe und den Prozessbedingungen ab und liegt bevorzugt im Bereich von 30 bis 80°C, sollten sich prozessbedingt höhere Temperaturen einstellen, wird das Gemisch bevorzugt auf Temperaturen unter 80°C gekühlt.

In einer weiteren bevorzugten Ausführungsform des erfindungsgemäßen Verfahrens werden
in einem ersten Schritt
Organosiliciumverbindung (E), gegebenenfalls im Gemisch mit Weichmacher (H), mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, kontinuierlich vermischt, in eine Verweilstrecke gepumpt und
in einem zweiten Schritt
die so erhaltene Reaktionsmischung mit einer P=O Gruppe aufweisenden Phosphorverbindung (C3), gegebenenfalls im Gemisch mit Verdünnungsmittel, vermischt, mit der Maßgabe, dass der zweite Schritt erst dann erfolgt, wenn im ersten Schritt mindestens 50 % der Si-OH-Gruppen in Komponente (E) mit Komponente (B) reagiert haben. In der Mischzone und Verweilstrecke herrscht bevorzugt ein Druck von 1,0 bis 5,0 bar. Bevorzugt wird die Mischung nach Beendigung des zweiten Schritts nicht entflüchtigt und in einen Lagertank abgefüllt. Die Temperatur hängt von der Ausgangstemperatur der Rohstoffe und den Prozessbedingungen ab und liegt bevorzugt im Bereich von 30 bis 80°C, sollten sich prozessbedingt höhere Temperaturen einstellen, wird das Gemisch bevorzugt auf Temperaturen unter 80°C gekühlt.

In einer besonders bevorzugten Ausführungsform des erfindungsgemäßen Verfahrens werden
in einem ersten Schritt
Organosiliciumverbindung (E), gegebenenfalls im Gemisch mit Weichmacher (H) und/oder weiteren Stoffen (I), gegebenenfalls bei einem Absolutdruck von 50 bis 300 mbar entgast und mit trockener Luft oder Stickstoff belüftet, mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, in einem Pastenrührer vermischt und nach 5 bis 15 min
in einem zweiten Schritt
die so erhaltene Reaktionsmischung mit einer P=O Gruppe aufweisenden Phosphorverbindung (C3), gegebenenfalls im Gemisch mit Verdünnungsmittel, sowie mindestens einer Komponente ausgewählt aus Katalysator (F), Calciumcarbonat (G), Füllstoff (G1), Weichmacher (H) und weiteren Stoffen (I), vermischt. Bevorzugt wird die Mischung bei einem Absolutdruck von 50 bis 300 mbar entgast und mit trockener Luft oder Stickstoff belüftet. Die Temperatur hängt von der Ausgangstemperatur der Rohstoffe und den Prozessbedingungen ab und liegt bevorzugt im Bereich von 20 bis 60°C.

In einer weiteren besonders bevorzugten Ausführungsform des erfindungsgemäßen Verfahrens werden
in einem ersten Schritt
Organosiliciumverbindung (E), gegebenenfalls im Gemisch mit Weichmacher (H) und/oder weiteren Stoffen (I), gegebenenfalls bei einem Absolutdruck von 50 bis 300 mbar entgast und mit trockener Luft oder Stickstoff belüftet, mit mindestens zwei Organyloxygruppen enthaltender Verbindung (B) in Anwesenheit von Base (C1) ausgewählt aus Guanidinen, Amidinen und lithiumhaltigen Basen, gegebenenfalls im Gemisch mit Verdünnungsmittel, in einem Pastenrührer vermischt und nach 5 bis 15 min
in einem zweiten Schritt
die so erhaltene Reaktionsmischung zunächst mit dem Katalysator (F) vermischt, anschließend mit einer P=O Gruppe aufweisenden Phosphorverbindung (C3), gegebenenfalls im Gemisch mit Verdünnungsmittel, sowie mindestens einer Komponente ausgewählt aus Calciumcarbonat (G), Füllstoff (G1), Weichmacher (H) und weiteren Stoffen (I), vermischt. Bevorzugt wird die Mischung bei einem Absolutdruck von 50 bis 300 mbar entgast und mit trockener Luft oder Stickstoff belüftet. Die Temperatur hängt von der Ausgangstemperatur der Rohstoffe und den Prozessbedingungen ab und liegt bevorzugt im Bereich von 20 bis 60°C.

Nach dem erfindungsgemäßen Verfahren kann eine Vielzahl von Organyloxygruppen aufweisende Organosiliciumverbindungen sowie deren Zusammensetzungen hergestellt werden.

Beispiele für die erfindungsgemäß hergestellten Organyloxygruppen aufweisenden Organosiliciumverbindungen sind

(MeO)₂(Me)SiO(Si(CH₃)₂O)₃₀₋₁₀₀₀Si(CH₃)₂(CH₂)₃NH₂,

(MeO)₂(Me)SiO(Si(CH₃)₂O)₃₀₋₁₀₀₀Si(CH₃)₂OSi(Me)(OMe)₂,

(EtO)₂(Me)SiO(Si(CH₃)₂O)₃₀₋₁₀₀₀Si(CH₃)₂OSi(Me)(OEt)(OMe),

(MeO)₂(Me)SiO(Si(CH₃)₂O)₃₀₋₁₀₀₀Si(CH₃)₂OSi(Me)₂(OMe),

(MeO)₂(Vi)SiO(Si(CH₃)₂O)₃₀₋₁₀₀₀Si(CH₃)₂OSi(Me)(OMe)₂,

(EtO)₂(Vi)SiO(Si(CH₃)₂O)₃₀₋₁₀₀₀Si(CH₃)₂OSi(Me)(OMe)₂,

(MeO)₂(Vi)SiO(Si(CH₃)₂O)₃₀₋₁₀₀₀Si(CH₃)₂OSi(Vi)(OMe)₂,

(EtO)₂(Vi)SiO(Si(CH₃)₂O)₃₀₋₁₀₀₀Si(CH₃)₂OSi(Vi)(OEt)₂,

(MeO)₂(Me)SiO(Si(CH₃)₂O)₃₀₋₁₀₀₀Si(CH₃)₂OSi(OMe)₃,

(EtO)₃SiO(Si(CH₃)₂O)₃₀₋₁₀₀₀Si(CH₃)₂OSi(OEt)₃,

(MeO)₂(Me)SiO(Si(CH₃)₂O)₃₀₋₁₀₀₀Si(CH₃)₃,

(MeO)₂(Me)SiO(Si(CH₃)₂O)₁₋₁₀₀Si(CH₃)₂(CH₂)₃O(CH₂CH(CH₃)O)₁₀₋

₁₀₀₀(CH₂)₃(Si(CH₃)₂O)₁₋₁₀₀Si(CH₃)₂(OSi(Me)(OMe)₂),

(MeO)₂(Me)SiO(Si(CH₃)₂O)₃₋₅₀₀Si[O(Si(CH₃)₂O)₃₋₅₀₀Si(Me)(OMe)₂]₃

und

(MeO)₂(Me)SiO(Si(CH₃)₂O)₃₋₅₀₀Si(CH₃)[O(Si(CH₃)₂O)₃₋₅₀₀Si(Me)(OMe)₂]₂.

Ein weiterer Gegenstand der Erfindung sind Zusammensetzungen enthaltend Organyloxygruppen aufweisende Organosiliciumverbindungen (A) sowie Salz (C) gebildet aus einer Base (C1) und einer P=O Gruppe aufweisenden Phosphorverbindung (C3).

Bei den erfindungsgemäß hergestellten Organosiliciumverbindungen (A) handelt es sich bevorzugt um solche mit 10 bis 10 000, besonders bevorzugt mit 100 bis 2000, Siliciumatomen.

Die erfindungsgemäß hergestellten Organyloxygruppen aufweisenden Organosiliciumverbindungen (A) sind insbesondere Teil von durch Kondensationsreaktion vernetzbaren Massen.

Die erfindungsgemäßen Zusammensetzungen können außer den Organyloxygruppen aufweisenden Organosiliciumverbindungen (A) und dem Salz (C) noch Base (C1) oder Phosphorverbindung (C3) sowie weitere Bestandteile enthalten.

Die erfindungsgemäßen Zusammensetzungen enthalten bevorzugt Organyloxygruppen aufweisende Organosiliciumverbindungen (A), Salz (C), gegebenenfalls Base (C1) oder Phosphorverbindung (C3), Komponente (B) sowie eine oder mehrere der Bestandteile (D), (F), (G), (G1), (H) und (I) .

Falls es sich bei den erfindungsgemäßen bzw. erfindungsgemäß hergestellten Zusammensetzungen um durch Kondensationsreaktion vernetzbare Massen handelt, enthalten diese Komponente (A) in Mengen von vorzugsweise 10 bis 70 Gewichtsteilen, besonders bevorzugt von 20 bis 65 Gewichtsteilen, insbesondere von 25 bis 60 Gewichtsteilen, jeweils bezogen auf 100 Gewichtsteile der vernetzbaren Gesamtmischung.

Besonders bevorzugt handelt es sich bei den erfindungsgemäßen Massen um durch Kondensationsreaktion vernetzbare Massen, enthaltend
(A) Organyloxygruppen aufweisende Organosiliciumverbindungen,
(B) mindestens zwei Organyloxygruppen aufweisende Organosiliciumverbindungen,
(C) Salz,
   gegebenenfalls
(C1) Base,
(D) organisches Lösungsmittel,
(F) Katalysator,
(G) Calciumcarbonat,
   gegebenenfalls
(G1) weitere Füllstoffe,
   gegebenenfalls
(H) Weichmacher und
   gegebenenfalls
(I) weitere Bestandteile.

Weiterhin besonders bevorzugt handelt es sich bei den erfindungsgemäßen Massen um durch Kondensationsreaktion vernetzbare Massen, enthaltend
(A) Organyloxygruppen aufweisende Organosiliciumverbindungen,
(B) mindestens zwei Organyloxygruppen aufweisende Organosiliciumverbindungen,
(C) Salz,
(C3) Phosphorverbindung,
   gegebenenfalls
(D) organisches Lösungsmittel,
(F) Katalysator,
(G) Calciumcarbonat,
   gegebenenfalls
(G1) weitere Füllstoffe,
   gegebenenfalls
(H) Weichmacher und
   gegebenenfalls
(I) weitere Bestandteile.

Bevorzugt handelt es sich bei Salz (C) um

(TBDH)⁺[(CH₃CH₂CH₂CH₂CH₂CH₂CH₂CH₂)P(=O)(OH)O]⁻,

(TBDH)⁺[P(=O)(OH)₂O]⁻,

(TBDH)⁺[(CH₃CH₂CH₂CH₂CH(CH₂CH₃)CH₂O)P(=O)(OH)O]⁻,

(TMGH)⁺[(CH₃CH₂CH₂CH₂CH₂CH₂CH₂CH₂)P(=O)(OH)O]⁻,

(TMGH)⁺[P(=O)(OH)₂O]⁻,

(TMGH)⁺[(CH₃CH₂CH₂CH₂CH(CH₂CH₃)CH₂O)P(=O)(OH)O]⁻,

(DBUH)⁺[(CH₃CH₂CH₂CH₂CH₂CH₂CH₂CH₂)P(=O)(OH)O]⁻,

(DBUH)⁺[P(=O)(OH)₂O]⁻,

(DBUH)⁺[(CH₃CH₂CH₂CH₂CH(CH₂CH₃)CH₂O)P(=O)(OH)O]⁻,

Li⁺[(CH₃CH₂CH₂CH₂CH₂CH₂CH₂CH₂)P(=O)(OH)O]⁻,

Li⁺[P(=O)(OH)₂O]⁻

oder

Li⁺[(CH₃CH₂CH₂CH₂CH(CH₂CH₃)CH₂O)P(=O)(OH)O]⁻,

wobei 1,5,7-Triazabicyclo[4.4.0]dec-5-en TBD, N,N,N',N'-Tetramethylguanidin TMG und 1,8-Diazabicyclo[5.4.0]undec-7-en DBU bedeuten.

Bei den erfindungsgemäßen Massen kann es sich um beliebige, bisher bekannte Typen von vernetzbaren Massen auf der Basis von Organosiliciumverbindungen handeln, wie beispielsweise einkomponentige oder zweikomponentige bei Raumtemperatur vulkanisierbare Organopolysiloxanmassen. Bevorzugt handelt es sich bei den erfindungsgemäßen Massen um vernetzbare einkomponentige Massen.

Für die Vernetzung der erfindungsgemäßen bzw. erfindungsgemäß hergestellten Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen bzw. erfindungsgemäß hergestellten Massen.

Die erfindungsgemäßen bzw. erfindungsgemäß hergestellten Massen können für alle Verwendungszwecke eingesetzt werden, für die unter Ausschluss von Wasser lagerfähige, bei Zutritt von Wasser bei Raumtemperatur zu Elastomeren vernetzende Massen bisher eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzten Oberflächen, oder das Gleiten verhindernden Überzügen, oder von gummielastischen Formkörpern sowie für die Isolierung von elektrischen oder elektronischen Vorrichtungen. Besonders eignen sich die erfindungsgemäß hergestellten Massen als Abdichtmassen für Fugen im Baubereich bzw. von Bauteilfugen, für die höhere Anforderungen an das Brandverhalten gelten.

Die erfindungsgemäß hergestellten Massen haben den Vorteil, dass sie lagerstabil und niedermodulig sind.

Das erfindungsgemäße Verfahren hat den Vorteil, dass auf einfache Art und Weise Organyloxygruppen aufweisende Organosiliciumverbindungen hergestellt werden können.

Das erfindungsgemäße Verfahren hat des Weiteren den Vorteil, dass bereits geringe Mengen an Zubereitung (C) ohne zusätzliches Heizen ein rasches Herstellen von organyloxyterminierten Organosiliciumverbindungen ermöglichen, welche für die Herstellung härtbarer Massen einsetzbar sind.

Das erfindungsgemäße Verfahren hat den Vorteil, dass die erfindungsgemäß hergestellten Organyloxygruppen aufweisenden Organosiliciumverbindungen gleich nach der Herstellung ohne vorhergehende Isolierung oder Nachbearbeitung, wie Filtration oder Desaktivierung durch hohe Temperaturen, zur Herstellung von vernetzbaren Massen eingesetzt werden können.

Das erfindungsgemäße Verfahren hat ferner den Vorteil, dass sich die Viskosität nach dem Verrühren (Mischviskosität) praktisch nicht mehr ändert und somit bei der Weiterverarbeitung keine zusätzlichen Probleme, wie z.B. durch zeitweisen oder allmählichen Viskositätsanstieg, auftreten.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

In den folgenden Beispielen wird die dynamische Viskosität der Organosiliciumverbindungen nach DIN 53019 gemessen. Dabei wurde bevorzugt wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹).

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

### Beispiel 1

324,3 g eines α,ω-Dihydroxypolydimethylsiloxans mit einer dynamischen Viskosität von 80 000 mPa·s, 180,0 g eines α,ω-Trimethylsiloxypolydimethylsiloxans mit einer dynamischen Viskosität von 1 000 mPa·s, 9,8 g Methyltrimethoxysilan, 2,9 g Vinyltrimethoxysilan und 0,12 g einer 50 Gew.-%igen Lösung von 1,5,7-Triazabicyclo[4.4.0]dec-5-en (käuflich erhältlich bei der Fa. Sigma-Aldrich Co., Deutschland) in Methanol wurden in einem Planetendissolver unter Ausschluss von Feuchtigkeit innig miteinander 10 Minuten gerührt. Danach wurden 4,32 g einer 50 Gew.-%igen Lösung von n-Octylphosphonsäure in Methyltrimethoxysilan hinzugefügt und weitere 5 Minuten bei 100 mbar gerührt. Anschließend wurde die Mischung durch Zugabe von 15,0 g Bis-(ethylacetoacetato)diisobutoxytitanat (käuflich erhältlich unter der Bezeichung "Tyzor® IBAY" bei der Dorf Ketal Speciality Catalysts LLC, USA-Stafford) ergänzt, daraufhin wurde weitere 10 Minuten bei 100 mbar gerührt. Anschließend wurde die Mischung durch Zugabe von 51,6 g hydrophiler pyrogener Kieselsäure mit einer BET-Oberfläche von 150 m²/g zugegeben (käuflich erhältlich unter der Bezeichnung HDK® V15 bei der Wacker Chemie AG, D-München) und 612 g mit Stearinsäure beschichtetes Marmormehl mit einem mittleren Teilchendurchmesser (D50%) von ca. 5,0 µm (käuflich erhältlich unter der Bezeichnung "OMYABOND 520 FL" bei der Firma OMYA, D-Köln) vervollständigt und 20 Minuten bei 100 mbar homogenisiert. Danach wurde die fertige Mischung in handelsübliche Polyethylenkartuschen abgefüllt.

Produktproben wurden wie angegeben untersucht; die Ergebnisse finden sich in Tabelle 1.

### Beispiel 2

324,3 g eines α,ω-Dihydroxypolydimethylsiloxans mit einer dynamischen Viskosität von 80 000 mPa·s, 180,0 g eines α,ω-Trimethylsiloxypolydimethylsiloxans mit einer dynamischen Viskosität von 1 000 mPa·s, 9,8 g Methyltrimethoxysilan, 2,9 g Vinyltrimethoxysilan und 0,12 g einer 50 Gew.-%igen Lösung von 1,5,7-Triazabicyclo[4.4.0]dec-5-en in Methanol wurden in einem Planetendissolver unter Ausschluss von Feuchtigkeit innig miteinander 10 Minuten gerührt. Anschließend wurden zu dieser Mischung 51,6 g hydrophile pyrogene Kieselsäure mit einer BET-Oberfläche von 150 m²/g (käuflich erhältlich unter der Bezeichnung HDK® V15 bei der Wacker Chemie AG, D-München) und 612 g mit Stearinsäure beschichtetes Marmormehl mit einem mittleren Teilchendurchmesser (D50%) von ca. 5,0 µm (käuflich erhältlich unter der Bezeichnung "OMYABOND 520 FL" bei der Firma OMYA, D-Köln) zugegeben und 20 Minuten bei 100 mbar homogenisiert. Anschließend wurde die Mischung durch Zugabe von 15,0 g Bis(ethylacetoacetato)diisobutoxytitanat und 4,32 g einer 50 Gew.-%igen Lösung von n-Octylphosphonsäure in Methyltrimethoxysilan vervollständigt und 5 Minuten bei 100 mbar gerührt. Danach wurde die fertige Mischung in handelsübliche Polyethylenkartuschen abgefüllt.

Produktproben wurden wie angegeben untersucht; die Ergebnisse finden sich in Tabelle 1.

### Beispiel 3

324,3 g eines α,ω-Dihydroxypolydimethylsiloxans mit einer dynamischen Viskosität von 80 000 mPa·s, 180,0 g eines α,ω-Trimethylsiloxypolydimethylsiloxans mit einer dynamischen Viskosität von 1 000 mPa·s, 9,8 g Methyltrimethoxysilan, 2,9 g Vinyltrimethoxysilan und 0,12 g einer 50 Gew.-%igen Lösung von 1,5,7-Triazabicyclo[4.4.0]dec-5-en in Methanol wurden in einem Planetendissolver unter Ausschluss von Feuchtigkeit innig miteinander 10 Minuten gerührt. Anschließend wurde die Mischung durch Zugabe von 15,0 g

Bis(ethylacetoacetato)diisobutoxytitanat ergänzt und weitere 10 Minuten bei 100 mbar gerührt. Anschließend wurden 51,6 g hydrophile pyrogene Kieselsäure mit einer BET-Oberfläche von 150 m²/g (käuflich erhältlich unter der Bezeichnung HDK® V15 bei der Wacker Chemie AG, D-München) und 612 g mit Stearinsäure beschichtetes Marmormehl mit einem mittleren Teilchendurchmesser (D50%) von ca. 5,0 µm (käuflich erhältlich unter der Bezeichnung "OMYABOND 520 FL" bei der Firma OMYA, D-Köln) zugegeben und 20 Minuten bei 100 mbar homogenisiert. Danach wurde die Mischung durch Zugabe von 4,32 g einer 50 Gew.-%igen Lösung von n-Octylphosphonsäure in Methyltrimethoxysilan vervollständigt und weitere 5 Minuten bei 100 mbar gerührt. Danach wurde die fertige Mischung in handelsübliche Polyethylenkartuschen abgefüllt.

Produktproben wurden wie angegeben untersucht; die Ergebnisse finden sich in Tabelle 1.

### Beispiel 4

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 8,64 g derselben Lösung verwendet wurde.

Produktproben wurden wie angegeben untersucht; die Ergebnisse finden sich in Tabelle 1.

### Beispiel 5

Die in Beispiel 4 beschriebene Verfahrensweise wird wiederholt, mit der Abänderung, dass anstelle von 0,12 g einer 50 Gew.-%igen Lösung von 1,5,7-Triazabicyclo[4.4.0]dec-5-en in Methanol 0,06 g 1,8-Diazabicyclo[5.4.0]undec-7-en (käuflich erhältlich bei der Fa. Sigma-Aldrich Co., Deutschland) verwendet wurde. Produktproben wurden wie angegeben untersucht; die Ergebnisse finden sich in Tabelle 1.

### Beispiel 6

Die in Beispiel 1 beschriebene Verfahrensweise wird wiederholt, mit der Abänderung, dass anstelle von 0,12 g einer 50 Gew.-%igen Lösung von 1,5,7-Triazabicyclo[4.4.0]dec-5-en in Methanol 0,06 g N,N,N',N'-Tetramethylguanidin (käuflich erhältlich bei der Fa. Sigma-Aldrich Co., Deutschland) verwendet wurde. Produktproben wurden wie angegeben untersucht; die Ergebnisse finden sich in Tabelle 1.

### Beispiel 7

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 7,31 g Tris(trimethylsilyl)phosphat (käuflich erhältlich bei der Fa. Sigma-Aldrich Co., Deutschland) verwendet wurde. Produktproben wurden wie angegeben untersucht; die Ergebnisse finden sich in Tabelle 1.

### Beispiel 8

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 5,70 g einer Mischung aus Mono- und Di-(2-ethylhexyl)-phosphorsäureester (käuflich erhältlich bei der Fa. ABCR GMBH & CO. KG, Deutschland) verwendet wurde.

Produktproben wurden wie angegeben untersucht; die Ergebnisse finden sich in Tabelle 1.

### Beispiel 9

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 2,14 g einer 50 Gew.-%igen Lösung von Methylphosphonsäure (käuflich erhältlich bei der Fa. ABCR GMBH & CO. KG, Deutschland) in Methyltrimethoxysilan verwendet wurde.

Produktproben wurden untersucht; die Ergebnisse finden sich in Tabelle 1.

### Beispiel 10

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 3,07 g einer 50 Gew.-%igen Lösung von 1-Butylphosphonsäure (käuflich erhältlich bei der Fa. ABCR GMBH & CO. KG, Deutsch-land) in Methyltrimethoxysilan verwendet wurde.

Produktproben wurden wie angegeben untersucht; die Ergebnisse finden sich in Tabelle 1.

### Beispiel 11

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 3,52 g einer 50 Gew.-%igen Lösung von Phenylphosphonsäure (käuflich erhältlich bei der Fa. Sigma-Aldrich Co., Deutschland) in Methyltrimethoxysilan verwendet wurde.

Produktproben wurden wie angegeben untersucht; die Ergebnisse finden sich in Tabelle 1.

### Beispiel 13

Die in Beispiel 4 beschriebene Verfahrensweise wird wiederholt, mit der Abänderung, dass anstelle von 0,12 g einer 50 Gew.-%igen Lösung von 1,5,7-Triazabicyclo[4.4.0]dec-5-en in Methanol 4,8 g einer 2 Gew.-%igen Lösung von Lithiumhydroxid (käuflich erhältlich bei der Fa. Sigma-Aldrich Co., Deutschland) in Methanol verwendet wurde.

Produktproben wurden wie angegeben untersucht; die Ergebnisse finden sich in Tabelle 1.

### Vergleichsbeispiel 1

Die in Beispiel 1 beschriebene Verfahrensweise wird wiederholt, mit der Abänderung, dass keine 50 Gew.-%ige Lösung von n-Octylphosphonsäure in Methyltrimethoxysilan verwendet wurde. Produktproben wurden wie angegeben untersucht; die Ergebnisse finden sich in Tabelle 2.

### Vergleichsbeispiel 3

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 6,46 g Diisooctylphosphinsäure (käuflich erhältlich bei der Fa. Sigma-Aldrich Co., Deutschland) verwendet wurde.

Produktproben wurden wie angegeben untersucht; die Ergebnisse finden sich in Tabelle 2.

### Vergleichsbeispiel 5

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 5,92 g Tributylphosphat (käuflich erhältlich bei der Fa. Sigma-Aldrich Co., Deutschland) verwendet wurde.

Produktproben wurden wie angegeben untersucht; die Ergebnisse finden sich in Tabelle 2.

### Vergleichsbeispiel 6

Die in Beispiel 1 beschriebene Verfahrensweise wird wiederholt, mit der Abänderung, dass anstelle von 4,32 g einer 50 Gew.-%igen Lösung von n-Octylphosphonsäure in Methyltrimethoxysilan 5,59 g Dibutyl-butylphosphonat (käuflich erhältlich bei der Fa. Sigma-Aldrich Co., Deutschland) verwendet wurde.

Produktproben wurden wie angegeben untersucht; die Ergebnisse finden sich in Tabelle 2.

### Vergleichsbeispiel 7

Die in Beispiel 4 beschriebene Verfahrensweise wird wiederholt, mit der Abänderung, dass anstelle von 0,12 g einer 50 Gew.-%igen Lösung von 1,5,7-Triazabicyclo[4.4.0]dec-5-en in Methanol 0,274 g einer ∼1 molaren Lösung von 1-tert-Butyl-4,4,4-tris(dimethylamino)-2,2-bis[tris(dimethylamino)-phosphoranylidenamino]-2λ5,4λ5-catenadi(phosphazene) in Hexan (käuflich erhältlich bei der Fa. Sigma-Aldrich Co., Deutschland) verwendet wurde.

Produktproben wurden wie angegeben untersucht; die Ergebnisse finden sich in Tabelle 2.

### Vergleichsbeispiel 8

Die in Beispiel 1 beschriebene Verfahrensweise wird wiederholt, mit der Abänderung, dass anstelle von 0,12 g einer 50 Gew.-%igen Lösung von 1,5,7-Triazabicyclo[4.4.0]dec-5-en in Methanol 0,155 g Zink-acetylacetonat Hydrat (käuflich erhältlich bei der Fa. Merck, Deutschland) und 0,604 g Dibutylamin (käuflich erhältlich bei der Fa. Merck, Deutschland) verwendet wurde. Produktproben wurden wie angegeben untersucht; die Ergebnisse finden sich in Tabelle 2.

### Vergleichsbeispiel 9

Die in Beispiel 13 beschriebene Verfahrensweise wird wiederholt, mit der Abänderung, dass keine 50 Gew.-%igen Lösung von n-Octylphosphonsäure in Methyltrimethoxysilan verwendet wurde. Produktproben wurden wie angegeben untersucht; die Ergebnisse finden sich in Tabelle 2.

### Vergleichsbeispiel 10

312,3 g eines α,ω-Dihydroxypolydimethylsiloxans mit einer Viskosität von 80 000 mPa·s, 9,8 g Methyltrimethoxysilan und 2,9 g Vinyltrimethoxysilan in einem Planetendissolver unter Ausschluss von Feuchtigkeit innig miteinander 5 Minuten gerührt. Danach wurden 0,78 g Tetraethylorthotitanat (käuflich erhältlich bei der Fa. ABCR GmbH & Co. KG, Deutschland) hinzugefügt und weitergerührt. Nach dem Einsetzen der Verdickung der Mischung wurden 15,6 g Methanol zugegeben und 30 Minuten bei 100 mbar gerührt. Die erhaltene Mischung konnte aufgrund der hohen Viskosität nicht weiterverarbeitet werden.

Produktproben wurden wie angegeben untersucht; die Ergebnisse finden sich in Tabelle 2.

### Beispiel 15

492 g eines α,ω-Dihydroxypolydimethylsiloxans mit einer dynamischen Viskosität von 80 000 mPa·s, 184 g eines α,ω-Trimethylsiloxypolydimethylsiloxans mit einer dynamischen Viskosität von 10 mPa·s, 10,3 g einer Lösung, hergestellt durch Vermischen von 16,5 g Methyltrimethoxysilan, 33,0 g Vinyltrimethoxysilan, 0,250 g 1,5,7-Triazabicyclo[4.4.0]dec-5-en (käuflich erhältlich bei der Fa. Sigma-Aldrich Co., Deutschland) und 1,0 g 1,3-Propandiol, wurden in einem Planetendissolver unter Ausschluss von Feuchtigkeit innig miteinander 10 Minuten gerührt. Danach wurden 16,0 g Methyltrimethoxysilan, 14,4 g eines Haftvermittlers, der hergestellt wird durch die Equilibrierung von 1 Gewichtsteil 3-Aminopropyltriethoxysilan mit 1 Gewichtsteil Methyltriethoxysilan-Hydrolysat mit einem Ethoxygehalt von 37 Gew.-%, 5,2 g 3-Aminopropyltrimethoxysilan und 2,40 g einer 50 Gew.-%igen Lösung von n-Octylphosphonsäure in Methyltrimethoxysilan hinzugefügt und weitere 5 Minuten gerührt. Anschließend wurde die Mischung durch Zugabe von 71 g hydrophiler pyrogener Kieselsäure mit einer BET-Oberfläche von 150 m²/g (käuflich erhältlich unter der Bezeichnung HDK® V15 bei der Wacker Chemie AG, D-München) ergänzt, daraufhin wurde weitere 10 Minuten bei 100 mbar gerührt. Anschließend wurde die Mischung durch Zugabe von 2,3 g eines Zinnkatalysators, der hergestellt wird durch Umsetzung von 77 Gew.-% Di-n-butylzinndiacetat und 23 Gew.-% Tetraethoxysilan (erhältlich unter der Bezeichung "Kat 416" bei der TIB Chemicals AG, D-Mannheim) vervollständigt und 5 Minuten bei 100 mbar homogenisiert. Danach wurde die fertige Mischung in handelsübliche Polyethylenkartuschen abgefüllt. Produktproben wurden wie angegeben untersucht; die Ergebnisse finden sich in Tabelle 1.

### Vergleichsbeispiel 12

Die in Beispiel 15 beschriebene Verfahrensweise wird wiederholt, mit der Abänderung, dass anstelle von 0,250 g 1,5,7-Triazabicyclo[4.4.0]dec-5-en (käuflich erhältlich bei der Fa. Sigma-Aldrich Co., Deutschland) und 1,0 g 1,3-Propandiol 0,155 g Zink-acetylacetonat Hydrat (käuflich erhältlich bei der Fa. Merck, Deutschland) und 0,604 g Dibutylamin (käuflich erhältlich bei der Fa. Merck, Deutschland) verwendet wurde. Die erhaltene Mischung konnte aufgrund der hohen Viskosität nicht weiterverarbeitet werden.

### Beschreibung der Prüfmethoden

Vor Beurteilung der Eigenschaften (Hautbildungszeit, Modul 100%, Zugfestigkeit, Shore A-Härte) nach den unten beschriebenen Prüfmethoden wurden Proben des Produkts zunächst in luft- und feuchtigkeitsdicht verschlossenen Kartuschen für 24 Stunden bei 23°C gelagert.

Des Weiteren wurde eine Probe bei 70°C gelagert. Nach der in Tabellen 1 und 2 angegebenen Vorlagerung von 14 Tagen bei 70°C wurden die Proben vor der Beurteilung der Eigenschaften wiederrum zunächst für 24 Stunden bei 23°C gelagert. Anschließend wurden die Eigenschaften (Hautbildungszeit, Modul 100%, Zugfestigkeit, Shore A-Härte) nach den unten beschriebenen Prüfmethoden bestimmt.

Die Hautbildungszeit wurde bei 50% relativer Luftfeuchtigkeit und 23°C ermittelt. Dabei wurde die Oberfläche einer frisch ausgestrichenen Masse in Abständen von 3 Minuten mit der Spitze eines Bleistifts mit der Härte HB leicht berührt. Die Hautbildungszeit ist dann erreicht, wenn an der Spitze des Bleistifts keine Masse mehr hängenbleibt.

Zur Bestimmung der Shore A-Härte gemäß DIN 53505 wurden 6 mm dicke Probekörper hergestellt, die über 7 Tage bei einer relativen Luftfeuchtigkeit von 50% und einer Temperatur von 23°C durch Reaktion mit der umgebenden Luftfeuchtigkeit ausgehärtet wurden.

Für die Bestimmung der mechanischen Kennwerte (Modul 100%, Zugfestigkeit) wurden 2 mm dicke Felle auf Polyethylenfolien ausgestrichen, die nach einem Tag Aushärtung von der Folie abgelöst und so aufgehängt wurden, dass für weitere 6 Tage von allen Seiten Luft zutreten konnte, so dass die Proben über insgesamt 7 Tage ausgehärtet wurden. Die relative Luftfeuchtigkeit wurde dabei auf 50% eingestellt, wobei die Temperatur auf 23°C geregelt wurde. Aus diesen Vulkanisat-Fellen wurden anschließend jeweils sieben Prüfkörper der Form S2 gemäß DIN 53504 ausgestanzt. Der angegebene Wert für den Modul 100% und für die Zugfestigkeit entspricht dem jeweiligen Mittelwert der Einzelmessungen.

Die Ergebnisse der erfindungsgemäßen Beispiele finden sich in Tabelle 1; die Ergebnisse der nicht erfindungsgemäßen Vergleichsbeispiele finden sich in Tabelle 2.

**Tabelle 1**

| | Vorlagerung | Einheit | **B1** | **B2** | **B3** | **B4** | **B5** | **B6** | **B7** | **B8** | **B9** | **B10** | **B11** | **B13** | **B15** |
|---|---|---|---|---|---|---|---|---|---|---|---|---|---|---|---|
| Hautbildungszeit | 1 Tag nach der Herstellung | [min] | 30 | 51 | 51 | 57 | 39 | 9 | 120 | 51 | 51 | 30 | 30 | 60 | 10 |
| | 14 Tage 70°C | [min] | 51 | 60 | 30 | 30 | 39 | 30 | 120 | 90 | 50 | 30 | 30 | 39 | 15 |
| Härte | 1 Tag nach der Herstellung | [Shore A] | 22 | 21 | 23 | 24 | 22 | 23 | 15 | 21 | 26 | 25 | 26 | 25 | 20 |
| | 14 Tage 70°C | [Shore A] | 15 | 11 | 14 | 24 | 19 | 20 | 10 | 11 | 20 | 21 | 20 | 23 | 15 |
| Modul 100% | 1 Tag nach der Herstellung | [MPa] | 0,34 | 0,32 | 0,35 | 0,41 | 0,33 | 0,39 | 0,30 | 0,34 | 0,40 | 0,40 | 0,42 | 0,42 | 0,42 |
| | 14 Tage 70°C | [MPa] | 0,28 | 0,27 | 0,29 | 0,46 | 0,33 | 0,39 | 0,26 | 0,28 | 0,41 | 0,43 | 0,37 | 0,42 | 0,37 |
| Zugfestigkeit | 1 Tag nach der Herstellung | [MPa] | 1,58 | 1,55 | 1,76 | 1,59 | 1,24 | 1,37 | 1,17 | 1,68 | 1,53 | 1,60 | 1,66 | 1,71 | 1,5 |
| | 14 Tage 70°C | [MPa] | 0,77 | 0,84 | 0,73 | 1,32 | 1,12 | 1,13 | 0,91 | 0,69 | 1,09 | 1,14 | 1,05 | 1,41 | 1,4 |

**Tabelle 2**

| | Vorlagerung | Einheit | **V1** | | **V3** | | **V5** | **V6** | **V7** | **V8** | **V9** | **V10** | V12 |
|---|---|---|---|---|---|---|---|---|---|---|---|---|---|
| Hautbildungszeit | 1 Tag nach der Herstellung | [min] | **21** | | **90** | | **21** | **39** | **120** | **21** | **30** | - ² | - ² |
| | 14 Tage 70°C | [min] | **120** | | - ¹ | | - ¹ | - ¹ | **120** | **60** | - ¹ | - ² | - ² |
| Härte | 1 Tag nach der Herstellung | [Shore A] | 23 | | 19 | | 21 | 19 | 11 | 22 | 23 | - ² | - ² |
| | 14 Tage 70°C | [Shore A] | - ¹ | | - ¹ | | - ¹ | - ¹ | 4 | 7 | - ¹ | - ² | - ² |
| Modul 100% | 1 Tag nach der Herstellung | [MPa] | 0,38 | | 0,33 | | 0,37 | 0,32 | 0,19 | 0,38 | 0,37 | - ² | - ² |
| | 14 Tage 70°C | [MPa] | - ¹ | | - ¹ | | - ¹ | - ¹ | 0,10 | 0,18 | - ¹ | - ² | - ² |
| Zugfestigkeit | 1 Tag nach der Herstellung | [MPa] | 1,52 | | 1,44 | | 1,32 | 1,11 | 0,47 | 1,67 | 1,43 | - ² | - ² |
| | 14 Tage 70°C | [MPa] | - ¹ | | - ¹ | | - ¹ | - ¹ | 0,11 | 0,33 | - ¹ | - ² | - ² |

| | | | | | | | | | | | | | |
|---|---|---|---|---|---|---|---|---|---|---|---|---|---|
| - ¹ Paste, härtet nicht aus - ² Nicht compoundierbar aufgrund Viskositätsanstieg | | | | | | | | | | | | | |

## Patentansprüche

1. Verfahren zur Herstellung von Organyloxygruppen aufweisenden Organosiliciumverbindungen enthaltenden Zusammensetzungen, **dadurch gekennzeichnet, dass**
in einem ersten Schritt
mindestens eine Silanolgruppe aufweisende Organosiliciumverbindung (E) mit mindestens zwei Organyloxygruppen enthaltender Verbindung (B) in Anwesenheit von Base (C1) ausgewählt aus Guanidinen, Amidinen und lithiumhaltigen Basen vermischt und reagieren gelassen wird und
in einem zweiten Schritt
die so erhaltene Reaktionsmischung mit einer P=O Gruppe aufweisenden Phosphorverbindung (C3) versetzt wird, **dadurch gekennzeichnet, dass** es sich bei P=O Gruppe aufweisender Phosphorverbindung (C3) um solche, ausgewählt aus Phosphorverbindungen der allgemeinen Formel
O=PR¹⁶ₘ(OR¹⁷)ₙ(OH)₃₋₍ₘ₊ₙ₎ (VII)
handelt, wobei
m gleich 0 oder 1 ist,
n gleich 0, 1, 2 oder 3 ist,
m+n gleich 1, 2 oder 3 beträgt,
R¹⁶ gegebenenfalls substituierter Kohlenwasserstoffrest darstellt,
R¹⁷ gleich oder verschieden sein kann und gegebenenfalls substituierter Kohlenwasserstoffrest, der mit Heteroatomen unterbrochen sein kann, über Si gebundener Triorganosilylrest, über Si gebundener Organoalkoxysilylrest oder über P gebundener Phosphatrest, bedeutet,
mit der Maßgabe, dass im Fall von R¹⁷ gleich gegebenenfalls substituierter Kohlenwasserstoffrest m gleich 0 und n gleich 1 oder 2 ist.

2. Verfahren nach Anspruch 1, **dadurch gekennzeichnet, dass** es sich bei Verbindung (B) um solche enthaltend Einheiten der Formel
R¹_{c}(OR²)_{d}(OH)ₑSiO_{(4-c-d-e)/2} (II)
handelt, wobei
R¹ gleiche oder verschiedene SiC-gebundene Kohlenwasserstoffreste bedeuten,
R² gleich oder verschieden sein kann und Kohlenwasserstoffrest, der mit Sauerstoffatomen unterbrochen sein kann, bedeutet,
c 0, 1, 2 oder 3 ist,
d 0, 1, 2, 3 oder 4 ist und
e 0 oder 1 ist,
mit der Maßgabe, dass die Summe aus c+d+e≤4 ist und pro Molekül mindestens zwei Reste -OR² vorhanden sind.

3. Verfahren nach Anspruch 1 oder 2, **dadurch gekennzeichnet, dass** es sich bei (C1) um Guanidine handelt.

4. Verfahren nach einem oder mehreren der Ansprüche 1 bis 3, **dadurch gekennzeichnet, dass** der zweite Schritt dann durchgeführt wird, wenn im ersten Schritt mindestens 50 % der Si-gebundenen OH-Gruppen in Komponente (E) mit Komponente (B) reagiert haben.

5. Verfahren nach einem oder mehreren der Ansprüche 1 bis 4, **dadurch gekennzeichnet, dass** das Vermischen der einzelnen Komponenten sowohl im ersten Schritt wie auch im zweiten Schritt unter weitestgehendem Ausschluss von Wasser aus der umgebenden Atmosphäre stattfindet.

6. Zusammensetzungen enthaltend Organyloxygruppen aufweisende Organosiliciumverbindungen (A) sowie Salz (C) gebildet aus einer Base (C1) ausgewählt aus Guanidinen, Amidinen und lithiumhaltigen Basen und einer P=O Gruppe aufweisenden Phosphorverbindung (C3), ausgewählt aus Phosphorverbindungen der allgemeinen Formel
O=PR¹⁶ₘ(OR¹⁷)ₙ(OH)₃₋₍ₘ₊ₙ₎ (VII),
wobei
m gleich 0 oder 1 ist,
n gleich 0, 1, 2 oder 3 ist,
m+n gleich 1, 2 oder 3 beträgt,
R¹⁶ gegebenenfalls substituierter Kohlenwasserstoffrest darstellt,
R¹⁷ gleich oder verschieden sein kann und gegebenenfalls substituierter Kohlenwasserstoffrest, der mit Heteroatomen unterbrochen sein kann, über Si gebundener Triorganosilylrest, über Si gebundener Organoalkoxysilylrest oder über P gebundener Phosphatrest, bedeutet,
mit der Maßgabe, dass im Fall von R¹⁷ gleich gegebenenfalls substituierter Kohlenwasserstoffrest m gleich 0 und n gleich 1 oder 2 ist.

7. Zusammensetzungen gemäß Anspruch 6, **dadurch gekennzeichnet, dass** es sich um durch Kondensationsreaktion vernetzbare Massen handelt, enthaltend
(A) Organyloxygruppen aufweisende Organosiliciumverbindungen,
(B) mindestens zwei Organyloxygruppen aufweisende Organosiliciumverbindungen,
(C) Salz,
gegebenenfalls
(C1) Base,
(D) organisches Lösungsmittel,
(F) Katalysator,
(G) Calciumcarbonat,
gegebenenfalls
(G1) weitere Füllstoffe,
gegebenenfalls
(H) Weichmacher und
gegebenenfalls
(I) weitere Bestandteile.

8. Zusammensetzungen gemäß Anspruch 6, **dadurch gekennzeichnet, dass** es sich um durch Kondensationsreaktion vernetzbare Massen handelt, enthaltend
(A) Organyloxygruppen aufweisende Organosiliciumverbindungen,
(B) mindestens zwei Organyloxygruppen aufweisende Organosiliciumverbindungen,
(C) Salz,
(C3) Phosphorverbindung,
gegebenenfalls
(D) organisches Lösungsmittel,
(F) Katalysator,
(G) Calciumcarbonat,
gegebenenfalls
(G1) weitere Füllstoffe,
gegebenenfalls
(H) Weichmacher und
gegebenenfalls
(I) weitere Bestandteile.

9. Formkörper, hergestellt durch Vernetzung der Massen gemäß den Ansprüchen 6 bis 8 oder hergestellt gemäß den Ansprüchen 1 bis 5.

## Claims

1. Process for the production of compositions comprising organosilicon compounds having organyloxy groups, **characterized in that**
in a first step
organosilicon compound (E) having at least one silanol group is mixed with compound (B) comprising at least two organyloxy groups in the presence of base (C1) selected from guanidines, amidines and lithium-containing bases, and the mixture is allowed to react, and
in a second step
a phosphorus compound (C3) having a P=O group is admixed with the resultant reaction mixture, **characterized in that** the phosphorus compound (C3) having a P=O group is selected from phosphorus compounds of the general formula
O=PR¹⁶ₘ(OR¹⁷)ₙ(OH)₃₋₍ₘ₊ₙ₎ (VII),
where
m is equal to 0 or 1,
n is equal to 0, 1, 2 or 3,
m+n is equal to 1, 2 or 3,
R¹⁶ is an optionally substituted hydrocarbon moiety,
R¹⁷ can be identical or different and is an optionally substituted hydrocarbon moiety which can have interruption by heteroatoms, is a triorganosilyl moiety bonded by way of Si, is an organoalkoxysilyl moiety bonded by way of Si, or is a phosphate moiety bonded by
way of P,
with the proviso that if R¹⁷ is equal to an optionally substituted hydrocarbon moiety m is equal to 0 and n is equal to 1 or 2.

2. Process according to Claim 1, **characterized in that** the compound (B) is selected from those comprising units of the formula
R¹_{c}(OR²)_{d}(OH)ₑSiO_{(4-c-d-e)/2} (II),
where
R¹ are identical or different SiC-bonded hydrocarbon moieties,
R² can be identical or different and is a hydrocarbon moiety which can have interruption by oxygen atoms,
c is 0, 1, 2 or 3,
d is 0, 1, 2, 3 or 4 and
e is 0 or 1,
with the proviso that the sum c+d+e ≤ 4 and at least two -OR² moieties are present per molecule.

3. Process according to Claim 1 or 2, **characterized in that** (C1) is selected from guanidines.

4. Process according to one or more of Claims 1 to 3, **characterized in that** the second step is carried out only when at least 50% of the Si-bonded OH groups in component (E) have reacted with component (B) in the first step.

5. Process according to one or more of Claims 1 to 4, **characterized in that** the mixing of the individual components both in the first step and in the second step takes place with very substantial exclusion of water from the surrounding atmosphere.

6. Composition comprising organosilicon compounds (A) having organyloxy groups, and also comprising salt (C) formed from a base (C1) selected from guanidines, amidines and lithium-containing bases and from a phosphorus compound (C3) having a P=O group, selected from phosphorus compounds of the general formula
O=PR¹⁶ₘ(OR¹⁷)ₙ(OH)₃₋₍ₘ₊ₙ₎ (VII),
where
m is equal to 0 or 1,
n is equal to 0, 1, 2 or 3,
m+n is equal to 1, 2 or 3,
R¹⁶ is an optionally substituted hydrocarbon moiety,
R¹⁷ can be identical or different and is an optionally substituted hydrocarbon moiety which can have interruption by heteroatoms, is a triorganosilyl moiety bonded by way of Si, is an organoalkoxysilyl moiety bonded by way of Si, or is a phosphate moiety bonded by
way of P,
with the proviso that if R¹⁷ is equal to an optionally substituted hydrocarbon moiety m is equal to 0 and n is equal to 1 or 2.

7. Composition according to Claim 6, **characterized in that** it is selected from compositions that are crosslinkable by a condensation reaction, comprising
(A) organosilicon compounds having organyloxy groups,
(B) organosilicon compounds having at least two organyloxy groups,
(C) salt,
optionally
(C1) base,
(D) organic solvent,
(F) catalyst,
(G) calcium carbonate,
optionally
(G1) other fillers,
optionally
(H) plasticizers and
optionally
(I) other constituents.

8. Composition according to Claim 6, **characterized in that** it is selected from compositions that are crosslinkable by a condensation reaction, comprising
(A) organosilicon compounds having organyloxy groups,
(B) organosilicon compounds having at least two organyloxy groups,
(C) salt,
(C3) phosphorus compound,
optionally
(D) organic solvent,
(F) catalyst,
(G) calcium carbonate, and
optionally
(G1) other fillers,
optionally
(H) plasticizers and
optionally
(I) other constituents.

9. Molding produced by crosslinking of the compositions according to Claims 6 to 8 or produced according to Claims 1 to 5.

## Revendications

1. Procédé de fabrication de compositions contenant des composés d'organosilicium comprenant des groupes organyloxy, **caractérisé en ce que**
lors d'une première étape,
un composé d'organosilicium comprenant au moins un groupe silanol (E) est mélangé avec un composé contenant au moins deux groupes organyloxy (B) en présence d'une base (C1) choisie parmi les guanidines, les amidines et les bases contenant du lithium, et laissé réagir, et
lors d'une deuxième étape,
le mélange réactionnel ainsi obtenu est mélangé avec un composé de phosphore comprenant un groupe P=O (C3), **caractérisé en ce que** le composé de phosphore comprenant un groupe P=O (C3) est un composé choisi parmi les composés de phosphore de formule générale
O=PR¹⁶ₘ(OR¹⁷)ₙ(OH)₃₋₍ₘ₊ₙ₎ (VII)
dans laquelle
m représente 0 ou 1,
n représente 0, 1, 2 ou 3,
m+n vaut 1, 2 ou 3,
R¹⁶ représente un radical hydrocarboné éventuellement substitué,
les R¹⁷ peuvent être identiques ou différents, et signifient un radical hydrocarboné éventuellement substitué, qui peut être interrompu par des hétéroatomes, un radical triorganosilyle relié par Si, un radical organoalcoxysilyle relié par Si ou un radical phosphate relié par P,
à condition que lorsque R¹⁷ représente un radical hydrocarboné éventuellement substitué, m représente 0 et n représente 1 ou 2.

2. Procédé selon la revendication 1, **caractérisé en ce que** le composé (B) consiste en un composé contenant des unités de formule
R¹_{c}(OR²)_{d}(OH)ₑSiO_{(4-c-d-e)/2} (II)
dans laquelle
les R¹ signifient des radicaux hydrocarbonés reliés à SiC identiques ou différents,
les R² peuvent être identiques ou différents, et signifient un radical hydrocarboné, qui peut être interrompu par des atomes d'oxygène,
c représente 0, 1, 2 ou 3,
d représente 0, 1, 2, 3 ou 4, et
e représente 0 ou 1,
à condition que la somme de c+d+e ≤ 4 et qu'au moins deux radicaux -OR² soient présents par molécule.

3. Procédé selon la revendication 1 ou 2, **caractérisé en ce que** (C1) consiste en des guanidines.

4. Procédé selon une ou plusieurs des revendications 1 à 3, **caractérisé en ce que** la deuxième étape est réalisée lorsqu'au moins 50 % des groupes OH reliés à Si dans le composant (E) ont réagi avec le composant (B) lors de la première étape.

5. Procédé selon une ou plusieurs des revendications 1 à 4, **caractérisé en ce que** le mélange des composants individuels a lieu aussi bien lors de la première étape que lors de la deuxième étape avec exclusion essentielle de l'eau de l'atmosphère environnante.

6. Compositions contenant des composés d'organosilicium comprenant des groupes organyloxy (A), ainsi qu'un sel (C) formé à partir d'une base (C1) choisie parmi les guanidines, les amidines et les bases contenant du lithium, et un composé de phosphore comprenant un groupe P=O (C3), choisi parmi les composés de phosphore de formule générale
O=PR¹⁶ₘ(OR¹⁷)ₙ(OH)₃₋₍ₘ₊ₙ₎ (VII)
dans laquelle
m représente 0 ou 1,
n représente 0, 1, 2 ou 3,
m+n vaut 1, 2 ou 3,
R¹⁶ représente un radical hydrocarboné éventuellement substitué,
les R¹⁷ peuvent être identiques ou différents, et signifient un radical hydrocarboné éventuellement substitué, qui peut être interrompu par des hétéroatomes, un radical triorganosilyle relié par Si, un radical organoalcoxysilyle relié par Si ou un radical phosphate relié par P,
à condition que lorsque R¹⁷ représente un radical hydrocarboné éventuellement substitué, m représente 0 et n représente 1 ou 2.

7. Compositions selon la revendication 6, **caractérisées en ce qu'**il s'agit de matériaux réticulables par une réaction de condensation, contenant :
(A) des composés d'organosilicium comprenant des groupes organyloxy,
(B) des composés d'organosilicium comprenant au moins deux groupes organyloxy,
(C) un sel,
éventuellement
(C1) une base,
(D) un solvant organique,
(F) un catalyseur,
(G) du carbonate de calcium,
éventuellement
(G1) d'autres charges,
éventuellement
(H) des plastifiants et
éventuellement
(I) d'autres constituants.

8. Compositions selon la revendication 6, **caractérisées en ce qu'**il s'agit de matériaux réticulables par une réaction de condensation, contenant :
(A) des composés d'organosilicium comprenant des groupes organyloxy,
(B) des composés d'organosilicium comprenant au moins deux groupes organyloxy,
(C) un sel,
(C3) un composé de phosphore,
éventuellement
(D) un solvant organique,
(F) un catalyseur,
(G) du carbonate de calcium,
éventuellement
(G1) d'autres charges,
éventuellement
(H) des plastifiants et
éventuellement
(I) d'autres constituants.

9. Corps moulé, fabriqué par réticulation des matériaux selon les revendications 6 à 8 ou fabriqués selon les revendications 1 à 5.
